(19) Europäisches Patentamt
European Patent Office
Office européen des brevets

(11) EP 3 998 649 A1

(12) **EUROPEAN PATENT APPLICATION**
published in accordance with Art. 153(4) EPC

(43) Date of publication:
**18.05.2022 Bulletin 2022/20**

(21) Application number: **20837256.5**

(22) Date of filing: **10.07.2020**

(51) International Patent Classification (IPC):
***H01M /(2006.01)***

(52) Cooperative Patent Classification (CPC):
**B32B 15/085; B32B 27/32; H01G 11/74; H01G 11/78; H01G 11/80;** Y02P 70/50

(86) International application number:
**PCT/JP2020/027120**

(87) International publication number:
**WO 2021/006350 (14.01.2021 Gazette 2021/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2019 JP 2019128632**
**04.10.2019 JP 2019184084**

(71) Applicant: **DAI NIPPON PRINTING CO., LTD.**
**Tokyo 162-8001 (JP)**

(72) Inventors:
- **KATO, Takahiro**
  **Tokyo 162-8001 (JP)**
- **TANAKA, Jun**
  **Tokyo 162-8001 (JP)**
- **MOCHIZUKI, Yoichi**
  **Tokyo 162-8001 (JP)**

(74) Representative: **Müller-Boré & Partner Patentanwälte PartG mbB**
**Friedenheimer Brücke 21**
**80639 München (DE)**

(54) **ADHESIVE FILM FOR METAL TERMINAL, METAL TERMINAL WITH ADHESIVE FILM FOR METAL TERMINAL, POWER STORAGE DEVICE USING SAID ADHESIVE FILM FOR METAL TERMINAL, AND METHOD FOR PRODUCING POWER STORAGE DEVICE**

(57) Provided is an adhesive film which is for a metal terminal and exhibits high adhesion strength to a metal terminal, when heated and pressurized a plurality of times before being adhered to the metal terminal. This adhesive film for a metal terminal is interposed between: a metal terminal electrically connected to an electrode of a power storage device element; and an exterior material for a power storage device that seals the power storage device element. The adhesive film for a metal terminal has a tensile elastic coefficient A of at least 490 MPa, when measured in an environment of a temperature of 25°C, after being left standing for 12 seconds in a heating and pressurizing environment of a temperature of 180°C and a surface pressure of 0.0067 MPa, and after being left standing for 1 hour in an environment of a temperature of 25°C.

EP 3 998 649 A1

## Description

TECHNICAL FIELD

The present disclosure relates to an adhesive film for metal terminals, a metal terminal having the adhesive film for metal terminals attached thereto, a power storage device obtained using the adhesive film for metal terminals, and a method for producing the power storage device.

BACKGROUND ART

Various types of power storage devices have been heretofore developed, and in every power storage device, an exterior material for power storage devices is an essential member to seal a power storage device element such as an electrode and an electrolyte. Metallic exterior materials for power storage devices have been heretofore widely used for the exterior material for power storage devices. In recent years, however, along with the improvement in the performance of electric cars, hybrid electric cars, personal computers, cameras, mobile phones, and the like, power storage devices are required to be diversified in shape and to be reduced in thickness and weight. However, the widely used metallic exterior materials for power storage devices have difficulty in conforming with the diversification of shapes, and are also disadvantageous in that they are limited in weight reduction.
Thus, in recent years, a laminated sheet in which a base material layer, an adhesive layer, a barrier layer, and a heat-sealable resin layer are sequentially laminated is proposed as an exterior material for power storage devices that is easily processed into diverse shapes and can achieve the reduction in thickness and weight. When such a film-shaped exterior material for power storage devices is used, a power storage device element is sealed with the exterior material by thermal fusion bonding a peripheral edge of the exterior material through heat sealing while allowing portions of the heat-sealable resin layer positioned as the innermost layer of the exterior material to be opposite to each other.
A metal terminal protrudes from the heat-sealed region of the exterior material for power storage devices, and the power storage device element sealed with the exterior material is electrically connected to the exterior via the metal terminal electrically connected to an electrode of the power storage device element. That is, at the part, in which the metal terminal exists, in the heat-sealed region of the exterior material for power storage devices, the exterior material is heat-sealed while holding the metal terminal between the portions of the heat-sealable resin layer. The metal terminal and the heat-sealable resin layer that are formed of different types of materials are likely to decrease the adhesiveness at the interface between the metal terminal and the heat-sealable resin layer.
Therefore, in order to increase the adhesiveness between the metal terminal and the heat-sealable resin layer, an adhesive film is sometimes disposed.

PRIOR ART DOCUMENT

PATENT DOCUMENT

Patent Document 1: Japanese Patent Laid-open Publication No. 2015-79638

SUMMARY OF THE INVENTION

PROBLEM TO BE SOLVED BY THE INVENTION

Such an adhesive film is required to have high adhesiveness between the exterior material for power storage devices and the metal terminal.
In a process of bonding the metal terminal to the exterior material for power storage devices, with the adhesive film interposed therebetween, heating and pressurizing are generally performed a plurality of times, for example, by a tentative bonding step and an actual bonding step of bonding the adhesive film to the metal terminal. The tentative bonding step is a step of tentatively bonding the adhesive film to the metal terminal and eliminating air bubbles, and the actual bonding step is a step of performing heating and pressurizing one time or a plurality of times under high-temperature conditions than in the tentative bonding step to bond the adhesive film to the metal terminal. A study of the present inventors and the like has made it clear that performing heating and pressurizing on the adhesive film before the actual bonding step and further performing heating and pressurizing in the actual bonding step cause the adhesive film to decrease its adhesion strength to the metal terminal due to the adverse effect of the plurality of times of heating and pressurizing. Depending on the degree of decrease in the adhesion strength, the adhesion strength of the exterior material for power storage devices to the metal terminal, with the adhesive film interposed therebetween, becomes insufficient.

Under such circumstances, a main object of the present disclosure is to provide an adhesive film for metal terminals which exhibits high adhesion strength to a metal terminal when heated and pressurized a plurality of times until the adhesive film is bonded to the metal terminal. Another object of the present disclosure is to provide a metal terminal having the adhesive film for metal terminals attached thereto, a power storage device obtained using the adhesive film for metal terminals, and a method for producing the power storage device.

MEANS FOR SOLVING THE PROBLEM

The inventors and the like of the present disclosure have conducted earnest studies to solve the above problem. As a result of the studies, it has been found that an adhesive film for metal terminals that has a tensile elastic modulus of a prescribed value or more exhibits high adhesion strength to a metal terminal when heated and pressurized a plurality of times until the adhesive film is bonded to the metal terminal, the tensile elastic modulus being measured in an environment at a temperature of 25°C, after the adhesive film is left standing for 12 seconds in a heating and pressurizing environment at a temperature of 180°C and a surface pressure of 0.0067 MPa and further left standing for 1 hour in an environment at a temperature of 25°C. The present disclosure has been completed by further conducting studies on the basis of this finding.

That is, the present disclosure provides an invention with the aspects described below.

An adhesive film for metal terminals that is configured to be interposed between a metal terminal electrically connected to an electrode of a power storage device element and an exterior material for power storage devices that seals the power storage device element,

the adhesive film having a tensile elastic modulus A of 490 MPa or more when measured in an environment at a temperature of 25°C, after the adhesive film is left standing for 12 seconds in a heating and pressurizing environment at a temperature of 180°C and a surface pressure of 0.0067 MPa and further left standing for 1 hour in an environment at a temperature of 25°C.

ADVANTAGES OF THE INVENTION

According to the present disclosure, an adhesive film for metal terminals can be provided that exhibits high adhesion strength to a metal terminal when heated and pressurized a plurality of times until the adhesive film is bonded to the metal terminal. Further, according to the present disclosure, a metal terminal having the adhesive film for metal terminals attached thereto, a power storage device obtained using the adhesive film for metal terminals, and a method for producing the power storage device can also be provided.

BRIEF DESCRIPTION OF THE DRAWINGS

Fig. 1 is a schematic plan view of a power storage device according to the present disclosure.
Fig. 2 is a schematic sectional view taken along a line A-A' in Fig. 1.
Fig. 3 is a schematic sectional view taken along a line B-B' in Fig. 1.
Fig. 4 is a schematic sectional view of an adhesive film, according to the present disclosure, for metal terminals.
Fig. 5 is a schematic sectional view of an adhesive film, according to the present disclosure, for metal terminals.
Fig. 6 is a schematic sectional view of an adhesive film, according to the present disclosure, for metal terminals.
Fig. 7 is a schematic sectional view of an adhesive film, according to the disclosure, for metal terminals.
Fig. 8 is a schematic sectional view of an exterior material, of the present disclosure, for power storage devices.
Fig. 9 is a schematic diagram of a stress-strain curve obtained by a tensile test of an adhesive film for metal terminals.
Fig. 10 is a schematic sectional view of a laminate (a metal terminal having an adhesive film for metal terminals attached thereto) including an adhesive film, a metal terminal, and an adhesive film, which is obtained, in Examples, by holding the metal terminal between the two adhesive films and thermal fusion bonding the adhesive films.
Fig. 11 is schematic diagrams illustrating a method for evaluating the water-vapor barrier properties (moisture content) in Examples.
Fig. 12 is a schematic diagram illustrating a machine direction (MD), a transverse direction (TD), and a thickness direction (y) in a production line of an adhesive film for metal terminals.

EMBODIMENTS OF THE INVENTION

An adhesive film, according to the present disclosure, for metal terminals is configured to be interposed between a metal terminal electrically connected to an electrode of a power storage device element and an exterior material for

power storage devices that seals the power storage device element. The adhesive film, according to the present disclosure, for metal terminals is characterized by having a tensile elastic modulus A of 490 MPa or more when measured in an environment at a temperature of 25°C, after the adhesive film is left standing for 12 seconds in a heating and pressurizing environment at a temperature of 180°C and a surface pressure of 0.0067 MPa and further left standing for 1 hour in an environment at a temperature of 25°C. The process of leaving the adhesive film for metal terminals standing for 12 seconds in a heating and pressurizing environment at a temperature of 180°C and a surface pressure of 0.0067 MPa is a process set assuming the heat and the pressure applied to the adhesive film in the tentative bonding step and the actual bonding step.

The adhesive film, according to the present disclosure, for metal terminals that has a tensile elastic modulus set to 490 MPa or more after subjected to the heating and pressurizing environment can exhibit high adhesion strength to a metal terminal when heated and pressurized a plurality of times until the adhesive film is bonded to the metal terminal.

A power storage device according to the present disclosure includes: a power storage device element including at least a positive electrode, a negative electrode, and an electrolyte; an exterior material for power storage devices that seals the power storage device element; and metal terminals respectively electrically connected to the positive electrode and the negative electrode and protruding outward from the exterior material, the power storage device being characterized in that the adhesive film, according to the present disclosure, for metal terminals is interposed between the metal terminals and the exterior material. Hereinafter, an adhesive film, according to the present disclosure, for metal terminals, a power storage device obtained using the adhesive film for metal terminals, and a method for producing the power storage device are described in detail.

In the present specification, the numerical range represented by "to" means "or more" and "or less". For example, the phrase "2 to 15 mm" means 2 mm or more and 15 mm or less.

## 1. Adhesive film for metal terminals

An adhesive film, according to the present disclosure, for metal terminals is configured to be interposed between a metal terminal electrically connected to an electrode of a power storage device element and an exterior material for power storage devices that seals the power storage device element. Specifically, for example, as illustrated in Figs. 1 to 3, an adhesive film 1, according to the present disclosure, for metal terminals is interposed between a metal terminal 2 electrically connected to an electrode of a power storage device element 4 and an exterior material 3 for power storage devices that seals the power storage device element 4. The metal terminal 2 protrudes outward from the exterior material 3 for power storage devices, and is held between portions of the exterior material 3, with the adhesive film 1 for metal terminals interposed between the metal terminal 2 and the exterior material 3, at a peripheral edge 3a of the exterior material 3 heat-sealed. In the present disclosure, the heating temperature when the exterior material for power storage devices is heat-sealed is typically in the range of about 160 to 190°C and the pressure is typically in the range of about 1.0 to 2.0 MPa. The tentative bonding step of bonding the adhesive film for metal terminals to the metal terminal is performed under the conditions of, for example, a temperature of about 140 to 160°C, a pressure of about 0.01 to 1.0 MPa, a period of about 3 to 15 seconds, and about 3 to 6 operations, and the actual bonding step is performed under the conditions of, for example, a temperature of about 160 to 240°C, a pressure of about 0.01 to 1.0 MPa, a period of about 3 to 15 seconds, and about 1 to 3 operations.

The adhesive film 1, according to the present disclosure, for metal terminals is provided to increase the adhesiveness between the metal terminal 2 and the exterior material 3 for power storage devices. The metal terminal 2 and the exterior material 3 for power storage devices that have increased adhesiveness therebetween improve the hermetic seal of the power storage device element 4. When the power storage device element 4 is sealed by heat sealing, it is, as described above, sealed such that the metal terminal 2 electrically connected to an electrode of the power storage device element 4 protrudes outward from the exterior material 3 for power storage devices. In the sealing, because the metal terminal 2 formed of a metal and a heat-sealable resin layer 35 (a layer formed of a heat-sealable resin such as a polyolefin) positioned as the innermost layer of the exterior material 3 for power storage devices are formed of different types of materials, the hermetic seal of the power storage device element is likely to be decreased at the interface between the metal terminal 2 and the heat-sealable resin layer 35 when such an adhesive film is not used.

The adhesive film 1, according to the present disclosure, for metal terminals may include a single layer illustrated in Fig. 4 or multiple layers illustrated in Figs. 5 to 7 as long as it has a tensile elastic modulus A (described later) of 490 MPa or more. The adhesive film 1, according to the present disclosure, for metal terminals preferably include multiple layers. When including multiple layers, the adhesive film 1, according to the present disclosure, for metal terminals preferably has a configuration in which at least a base material 11 and a first polyolefin layer 12a are laminated as illustrated in Figs. 5 to 7, and more preferably has a configuration in which at least a first polyolefin layer 12a, a base material 11, and a second polyolefin layer 12b are laminated in this order as illustrated in Figs. 6 and 7. Further, the adhesive film 1, according to the present disclosure, for metal terminals preferably includes the first polyolefin layer 12a and the second polyolefin layer 12b respectively positioned at surfaces on both sides.

In the adhesive film 1, according to the present disclosure, for metal terminals, it is preferred that at least one of the first polyolefin layer 12a or the second polyolefin layer 12b contains an acid-modified polyolefin, and it is further preferred that the first polyolefin layer 12a and the second polyolefin layer 12b contain an acid-modified polyolefin. Further, the base material 11 preferably contains a polyolefin. As described later, the first polyolefin layer 12a and the second polyolefin layer 12b are each preferably an acid-modified polypropylene layer formed of acid-modified polypropylene. Further, the base material 11 is preferably a polypropylene layer formed of polypropylene.

Specific examples of a preferable laminated configuration of the adhesive film 1, according to the present disclosure, for metal terminals, include: a two-layer configuration of an acid-modified polypropylene layer and a polypropylene layer; a three-layer configuration in which an acid-modified polypropylene layer, a polypropylene layer, an acid-modified polypropylene layer are laminated in this order; and a five-layer configuration in which an acid-modified polypropylene layer, a polypropylene layer, an acid-modified polypropylene layer, a polypropylene layer, and an acid-modified polypropylene layer are laminated in this order. Among these examples, more preferred are a two-layer configuration of an acid-modified polypropylene layer and a polypropylene layer, and a three-layer configuration in which an acid-modified polypropylene layer, a polypropylene layer, and an acid-modified polypropylene layer are laminated in this order, and particularly preferred is a three-layer configuration in which an acid-modified polypropylene layer, a polypropylene layer, and an acid-modified polypropylene layer are laminated in this order.

When the adhesive film 1, according to the present disclosure, for metal terminals is disposed between the metal terminal 2 of a power storage device 10 and the exterior material 3 for power storage devices, a surface of the metal terminal 2 formed of a metal is bonded to the heat-sealable resin layer 35 (a layer formed of a heat-sealable resin such as a polyolefin) of the exterior material 3, with the adhesive film 1 interposed between the metal terminal 2 and the exterior material 3.

The adhesive film 1, according to the present disclosure, for metal terminals has a tensile elastic modulus A of 490 MPa or more when measured in an environment at a temperature of 25°C, after the adhesive film 1 is left standing for 12 seconds in a heating and pressurizing environment at a temperature of 180°C and a surface pressure of 0.0067 MPa and further left standing for 1 hour in an environment at a temperature of 25°C. From the viewpoint of allowing the adhesive film 1 for metal terminals to exhibit higher adhesion strength to the metal terminal when heated and pressurized a plurality of times until the adhesive film 1 is bonded to the metal terminal, the adhesive film 1 has a tensile elastic modulus A of preferably approximately 520 MPa or more, more preferably approximately 550 MPa or more, further preferably approximately 569 MPa or more, further preferably approximately 573 MPa or more. The upper limit of the tensile elastic modulus A is, for example, approximately 850 MPa or less. From the viewpoint of increasing the impact-resistance absorption energy described later, the adhesive film 1 for metal terminals has a tensile elastic modulus A of preferably approximately 800 MPa or less. From the viewpoint of forming the adhesive film 1 for metal terminals that has further excellent bendability (that has a good evaluation in a bend test described later), the adhesive film 1 has a tensile elastic modulus A of preferably approximately 680 MPa or less, more preferably approximately 610 MPa or less. A preferable range of the tensile elastic modulus A is, for example, about 490 to 850 MPa, about 490 to 800 MPa, about 490 to 680 MPa, about 490 to 610 MPa, about 520 to 850 MPa, about 520 to 800 MPa, about 520 to 680 MPa, about 520 to 610 MPa, about 550 to 850 MPa, about 550 to 800 MPa, about 550 to 680 MPa, about 550 to 610 MPa, about 569 to 850 MPa, about 569 to 800 MPa, about 569 to 680 MPa, about 569 to 610 MPa, about 573 to 850 MPa, about 573 to 800 MPa, about 573 to 680 MPa, and about 573 to 610 MPa. From the viewpoint of forming the adhesive film 1 for metal terminals that exhibits high adhesion strength to the metal terminal and is comprehensively good in bendability, rate of change in thickness, and impact absorption energy that are described later, a comprehensively preferable range of the tensile elastic modulus A is about 500 to 550 MPa. The method for measuring the tensile elastic modulus A is as follows.

<Tensile elastic modulus A after heating and pressurizing>

The tensile elastic modulus of an adhesive film for metal terminals after heating and pressurizing for 12 seconds under the conditions of a temperature of 180°C and a surface pressure of 0.0067 MPa is measured by the following procedure. First, an adhesive film for metal terminals is cut into a strip having a width (TD) of 15 mm and a length (MD) of 50 mm. The MD and the TD of the adhesive film for metal terminals can be determined by observing a sea-island structure on the section in the thickness direction of the adhesive film. The shape of an island observed on the section in the MD is generally a long shape compared to that on the section in the TD. Next, the adhesive film for metal terminals held between two tetrafluoroethylene-ethylene copolymer films (ETFE films, thickness: 100 μm) is placed on a hot plate heated to 180°C, a sponge-attached 500-g weight is put thereon, the adhesive film is left standing for 12 seconds and immediately thereafter left standing for 1 hour in an environment at atmospheric pressure and 25°C, and thus a test pieces is obtained. Next, a stress-strain curve of the test piece is obtained in an environment at atmospheric pressure and 25°C, using a TENSILON universal material testing instrument (for example, RTG-1210 manufactured by A & D Company, Limited), under the conditions of a tensile speed of 300 mm/min and a chuck distance of 30 mm, and the

tensile elastic modulus A of the adhesive film for metal terminals after heating and pressurizing is derived from the inclination of a line connecting two points representing strains of 0.05% and 0.25%.

The adhesive film 1, according to the present disclosure, for metal terminals has a tensile elastic modulus B of, for example, approximately 900 MPa or less when measured in an environment at a temperature of 25°C, before the adhesive film is exposed to the heating and pressurizing environment. From the viewpoint of forming the adhesive film 1 for metal terminals that has excellent bendability (that has a good evaluation in a bend test described later), the adhesive film 1 preferably has a tensile elastic modulus B of approximately 700 MPa or less. From the viewpoint of increasing the resilience of the adhesive film 1 for metal terminals and facilitating the positioning of the adhesive film 1 with the metal terminal, the adhesive film 1 preferably has a tensile elastic modulus B of preferably approximately 400 MPa or more. A preferable range of the tensile elastic modulus B is, for example, about 400 to 900 MPa and about 400 to 700 MPa. Among these examples, particularly the range of about 400 to 700 MPa is preferred. From the viewpoint of forming the adhesive film 1 for metal terminals that exhibits high adhesion strength to the metal terminal and is comprehensively good in bendability, rate of change in thickness, and impact absorption energy that are described later, a comprehensively preferable range of the tensile elastic modulus B is 420 to 600 MPa, and further, 420 to 480 MPa. The method for measuring the tensile elastic modulus B is as follows.

<Tensile elastic modulus B before heating and pressurizing>

The tensile elastic modulus B of an adhesive film for metal terminals (an adhesive film for metal terminals before the heating and pressurizing in the <Tensile elastic modulus A after heating and pressurizing> described above) in an environment at 25°C is measured in accordance with the specification of JIS K7161-1 (ISO527-1). Specifically, an adhesive film for metal terminals is cut into a strip having a width (TD) of 15 mm and a length (MD) of 50 mm. Next, a stress-strain curve of the test piece of the adhesive film for metal terminals is obtained in an environment at 25°C, using a TENSILON universal material testing instrument (for example, RTG-1210 manufactured by A & D Company, Limited), under the conditions of a tensile speed of 300 mm/min and a chuck distance of 30 mm, and the tensile elastic modulus B of the adhesive film before heating and pressurizing is derived from the inclination of a line connecting two points representing strains of 0.05% and 0.25%.

The tensile elastic moduli of the adhesive film 1, according to the present disclosure, for metal terminals can be adjusted by, for example, the laminated configuration, the melting point, the MFR, and the thickness of layers, the thickness ratio between layers, and further the conditions (such as extrusion width from a T-die, a stretch ratio, a stretch rate, and heat-treatment temperature) of a T-die, inflation, or the like in the production of the adhesive film 1.

From the viewpoint of forming the adhesive film 1, according to the present disclosure, for metal terminals that has excellent bendability (that has a good evaluation in a bend test described later), the adhesive film 1 has a difference in tensile elastic modulus of, for example -250 to 200 MPa, the difference being calculated by deducting a value of the tensile elastic modulus B from a value of the tensile elastic modulus A. From the viewpoint of allowing the adhesive film 1 for metal terminals to exhibit higher adhesion strength to the metal terminal when heated and pressurized a plurality of times until the adhesive film 1 is bonded to the metal terminal, the difference is preferably greater, preferably 5 MPa or more, more preferably 20 MPa or more, further preferably 40 MPa or more. The upper limit of the difference in tensile elastic modulus is generally 120 MPa or less. A preferable range of the difference in tensile elastic modulus is, for example, about 5 to 120 MPa, about 20 to 120 MPa, and about 40 to 120 MPa. From the viewpoint of forming the adhesive film 1 for metal terminals that exhibits high adhesion strength to the metal terminal and is comprehensively good in bendability, rate of change in thickness, and impact absorption energy that are described later, a comprehensively preferable range of the difference in tensile elastic modulus is about 40 to 75MPa.

From the viewpoint of allowing the adhesive film 1, according to the present disclosure, for metal terminals to exhibit higher adhesion strength to the metal terminal when heated and pressurized a plurality of times until the adhesive film 1 is bonded to the metal terminal, the adhesive film 1 has a lower yield point stress of preferably 17.0 MPa or more, more preferably 18.0 MPa or more, and preferably 28.0 MPa or less, more preferably 26.0 MPa or less, the lower yield point stress being derived from a graph (stress-strain curve) that is obtained by performing a tensile test in accordance with a method specified in JIS K7127, under the conditions of a temperature of 25°C, a tensile speed of 175 mm/min, and a chuck distance of 30 mm, and represents a relationship between stress (MPa) and strain (mm). A preferable range of the lower yield point stress is, for example, about 17.0 to 28.0 MPa, about 17.0 to 26.0 MPa, about 18.0 to 28.0 MPa, and 18.0 to 26.0 MPa. Among these examples, particularly the range of about 18.0 to 26.0 MPa is preferred. In terms of the adhesiveness, the bendability, and the conformity, a comprehensively preferable range of the lower yield point stress is about 17.0 to 18.0 MPa. The method for measuring the lower yield point stress is as follows.

<Lower yield point stress after heating and pressurizing>

The stress (lower yield point stress) at a lower yield point L (see the schematic diagram in Fig. 9) is derived

from a stress-strain curve obtained by performing a tensile test in accordance with a method specified in JIS K7127, under the conditions of a temperature of 25°C, a tensile speed of 175 mm/min, and a chuck distance of 30 mm.

The lower yield point stress of the adhesive film 1, according to the present disclosure, for metal terminals can be adjusted by, for example, the laminated configuration, the melting point, the MFR, and the thickness of layers, the thickness ratio between layers, and further the conditions (such as extrusion width from a T-die, a stretch ratio, a stretch rate, and heat-treatment temperature) of a T-die, inflation, or the like in the production of the adhesive film 1.

The adhesive film 1, according to the present disclosure, for metal terminals preferably has a rate of change in thickness close to 100% between before and after heating and pressurizing for 12 seconds under the conditions of a temperature of 180°C and a surface pressure of 0.0067 MPa (that is, a small change or no change in thickness between before and after heating and pressurizing). Specifically, the adhesive film 1 for metal terminals has a rate of change in thickness of preferably 90 to 100%, more preferably 95 to 100%, further preferably 96 to 100%. The adhesive film 1 for metal terminals that has a rate of change in thickness within these ranges is inhibited from being greatly changed in thickness during thermal fusion bonding with the exterior material 10 for power storage devices and from generating a void therebetween. The rate of change in thickness of the adhesive film 1 for metal terminals can be calculated by the calculation formula (thickness of adhesive film after heating and pressurizing)/(thickness of adhesive film before heating and pressurizing) $\times$ 100.

The impact absorption energy that is calculated from the area of a part surrounded by the stress-strain curve obtained in the <Tensile elastic modulus A after heating and pressurizing> described above is preferably approximately 90 MPa or more, more preferably approximately 140 MPa or more, and preferably approximately 400 MPa or less, more preferably approximately 300 MPa or less. A preferable range is, for example, about 90 to 400 MPa. A material having a smaller value of the impact absorption energy is easily fractured without big deformation, and a material having a greater value of the impact absorption energy is fractured after greatly deformed and can be said to be a material that is a tenacious and is not easily broken.

From the viewpoint of increasing the conformity to the shape of the metal terminal 2, the adhesive film 1, according to the present disclosure, for metal terminals has a total thickness of, for example, approximately 120 $\mu$m or more, preferably approximately 140 $\mu$m or more, more preferably approximately 150 $\mu$m or more. The upper limit of the total thickness of the adhesive film 1, according to the present disclosure, for metal terminals is, for example, approximately 200 $\mu$m. A preferable range of the total thickness of the adhesive film 1, according to the present disclosure, for metal terminals is, for example, about 120 to 200 $\mu$m, about 140 to 200 $\mu$m, and about 150 to 200 $\mu$m. From the viewpoint of forming the adhesive film 1 for metal terminals that exhibits high adhesion strength to the metal terminal and is comprehensively good in bendability, rate of change in thickness, and impact absorption energy, particularly preferred is, for example, the range of about 145 to 155 $\mu$m.

<Adhesive film, according to the present disclosure, for metal terminals that includes single layer>

When including a single layer, the adhesive film 1, according to the present disclosure, for metal terminals preferably includes the first polyolefin layer 12a having the physical properties described above.

<Adhesive film, according to the present disclosure, that includes multiple layers>

When including multiple layers, the adhesive film 1, according to the present disclosure, for metal terminals is preferably a laminate having a configuration in which at least the base material 11 and the first polyolefin layer 12a are laminated, and having the properties described above, and the adhesive film 1 is more preferably a laminate having a configuration in which at least the first polyolefin layer 12a, the base material 11, and the second polyolefin layer 12b are laminated in this order, and having the properties described above.

Hereinafter, the base material 11, the first polyolefin layer 12a, and the second polyolefin layer 12b are described in detail.

[Base material 11]

In the adhesive film 1 for metal terminals, the base material 11 is a layer functioning as a support for the adhesive film 1 and is provided as necessary.

A material for forming the base material 11 is not particularly limited. Examples of the material for forming the base material 11 include a polyolefin, a polyamide, a polyester, an epoxy resin, an acrylic resin, a fluororesin, a silicone resin, a phenolic resin, a polyether imide, a polyimide, polycarbonate, and mixtures and copolymerized products thereof. Among these examples, particularly a polyolefin is preferred. That is, the material for forming the base material 11 is preferably a resin having a polyolefin backbone, such as a polyolefin or an acid-modified polyolefin. The resin that forms the base material 11 can be confirmed to have a polyolefin backbone by analysis such as infrared spectroscopy or gas

chromatography-mass spectrometry.

Specific examples of the polyolefin include polyethylene such as low-density polyethylene, medium-density polyethylene, high-density polyethylene, and linear low-density polyethylene; crystalline or noncrystalline polypropylene such as homopolypropylene, polypropylene as a block copolymer (e.g., a block copolymer of propylene and ethylene), and polypropylene as a random copolymer (e.g., a random copolymer of propylene and ethylene); and a terpolymer of ethylene-butene-propylene. Among these polyolefins, preferred are, for example, polyethylene and polypropylene, and more preferred is, for example, polypropylene.

Specific examples of the polyamide include aliphatic polyamides such as nylon 6, nylon 66, nylon 610, nylon 12, nylon 46, and a copolymer of nylon 6 with nylon 66; aromatic-containing polyamides such as a hexamethylenediamine-isophthalic acid-terephthalic acid copolymerized polyamide (e.g., nylon 61, nylon 6T, nylon 6IT, and nylon 6I6T (I represents isophthalic acid and T represents terephthalic acid) having a structural unit derived from terephthalic acid and/or isophthalic acid) and polymethaxylylene adipamide (MXD6); alicyclic polyamides such as polyaminomethyl cyclohexyl adipamide (PACM 6); a polyamide obtained by copolymerizing a lactam component with an isocyanate component such as 4,4'-diphenylmethane-diisocyanate, and a polyester amide copolymer and a polyether ester amide copolymer as a copolymer of a copolymerized polyamide with a polyester or polyalkylene ether glycol; and copolymers thereof. These polyamides may be used alone or in combination of two or more thereof.

Specific examples of the polyester include polyethylene terephthalate, polybutylene terephthalate, polyethylene naphthalate, polybutylene naphthalate, polyethylene isophthalate, a copolymerized polyester with ethylene terephthalate as a main repeating unit, and a copolymerized polyester with butylene terephthalate as a main repeating unit. Specific examples of the copolymerized polyester with ethylene terephthalate as a main repeating unit include a copolymer polyester obtained by polymerizing ethylene terephthalate as a main repeating unit with ethylene isophthalate (abbreviated as polyethylene (terephthalate/isophthalate) and the same applies hereinafter), polyethylene (terephthalate/isophthalate), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). Specific examples of the copolymerized polyester with butylene terephthalate as a main repeating unit include a copolymer polyester obtained by polymerizing butylene terephthalate as a main repeating unit with butylene isophthalate (abbreviated as polybutylene(terephthalate/isophthalate) and the same applies hereinafter), polybutylene (terephthalate/adipate), polybutylene (terephthalate/sebacate), polybutylene (terephthalate/decane dicarboxylate), and polybutylene naphthalate. These polyesters may be used alone or in combination of two or more thereof.

The base material 11 may be formed of a non-woven fabric formed of a resin described above. When being a non-woven fabric, the base material 11 is preferably formed of a polyolefin, a polyamide, or the like described above.

In addition, by blending a colorant in the base material 11, the base material 11 can be formed as a layer containing a colorant. Further, by selecting a low-transparency resin, the light transmittance can be adjusted. When the base material 11 is a film, a colored film or a low-transparency film can be used. When the base material 11 is a non-woven fabric, a non-woven fabric obtained using fibers containing a colorant, and a binder, or a low-transparency non-woven fabric can be used.

From the viewpoint of allowing the adhesive film 1 for metal terminals to satisfy the properties described above and exhibit higher adhesion strength to the metal terminal when heated and pressurized a plurality of times until the adhesive film 1 is bonded to the metal terminal, the base material 11 has a melt mass-flow rate (MFR) at 230°C of preferably 8 g/10 min or less, more preferably 4 g/10 min or less. From the viewpoint of forming the adhesive film 1 for metal terminals that has excellent bendability (that has a good evaluation in a bend test described later), the base material 11 has a melt mass-flow rate at 230°C of preferably 1 g/10 min or more, more preferably 2 g/10 min or more. A preferable range is, for example, about 1 to 8 g/10 min, about 1 to 4 g/10 min, about 2 to 8 g/10 min, and about 2 to 4 g/10 min. When the base material layer 11 is a polyolefin layer (a layer formed of a polyolefin), it is particularly suitable that the value of the MFR of the polyolefin layer satisfies the above value. The melt mass-flow rate (MFR) of the base material 11 is a value (g/10 min) measured at 230°C in accordance with the specification of JIS K7210-1: 2014 (ISO 1133-1: 2011).

From the viewpoint of allowing the adhesive film 1 for metal terminals to satisfy the properties described above and exhibit higher adhesion strength to the metal terminal when heated and pressurized a plurality of times until the adhesive film 1 is bonded to the metal terminal, the base material 11 has a melting point of preferably 130°C or more, more preferably 150°C or more. From the viewpoint of forming the adhesive film 1 for metal terminals that has excellent bendability (that has a good evaluation in a bend test described later), the base material 11 has a melting point of preferably 190°C or less, more preferably 170°C or less. A preferable range is about 130 to 190°C and about 150 to 170°C. The melting point of the base material 11 is measured by a method described in Examples.

When the base material 11 is formed of a resin film, a surface of the base material 11 may be subjected to known bonding facilitating means as necessary, such as a corona discharge treatment, an ozone treatment, or a plasma treatment.

From the viewpoint of allowing the adhesive film 1 for metal terminals to exhibit higher adhesion strength to the metal terminal when heated and pressurized a plurality of times until the adhesive film 1 is bonded to the metal

terminal, the base material 11 has a thickness of preferably approximately 50 μm or more, more preferably approximately 60 μm or more, further preferably approximately 80 μm or more, further preferably approximately 90 μm or more, and preferably approximately 150 μm or less, more preferably approximately 130 μm or less, further preferably approximately 120 μm or less. A preferable range is, for example, about 50 to 150 μm, about 50 to 130 μm, about 50 to 120 μm, about 60 to 150 μm, about 60 to 130 μm, about 60 to 120 μm, about 80 to 150 μm, about 80 to 130 μm, about 80 to 120 μm, about 90 to 150 μm, about 90 to 130 μm, and about 90 to 120 μm. Among these examples, the range of about 90 to 120 μm is particularly preferred.

[First and second polyolefin layers 12a, 12b]

The adhesive film 1, according to the present disclosure, for metal terminals preferably includes the first polyolefin layer 12a. When including a single layer, the adhesive film 1, according to the present disclosure, for metal terminals preferably includes the first polyolefin layer 12a illustrated in Fig. 4. When including multiple layers, the adhesive film 1, according to the present disclosure, for metal terminals preferably has a configuration in which at least the base material 11 and the first polyolefin layer 12a are laminated, and more preferably has a configuration in which at least the first polyolefin layer 12a, the base material 11, and the second polyolefin layer 12b are laminated in this order as illustrated in Figs. 6 and 7. Further, the adhesive film 1, according to the present disclosure, for metal terminals preferably includes the first polyolefin layer 12a and the second polyolefin layer 12b respectively positioned at surfaces on both sides.

It is preferred that at least one of the first polyolefin layer 12a or the second polyolefin layer 12b contains an acid-modified polyolefin, and it is further preferred that the first polyolefin layer 12a and the second polyolefin layer 12b contain an acid-modified polyolefin. When at least one of the first or second polyolefin layer 12a, 12b is formed of an acid-modified polyolefin, there are cases in which one of the first or second polyolefin layer 12a, 12b is formed of an acid-modified polyolefin and the other is formed of a polyolefin, and cases in which both the first and second polyolefin layers 12a, 12b are formed of an acid-modified polyolefin. The acid-modified polyolefin has high affinity for a metal and a heat-sealable resin such as a polyolefin. The polyolefin has high affinity for a heat-sealable resin such as a polyolefin. Accordingly, the adhesive film 1, according to the present disclosure, for metal terminals can exhibit excellent adhesiveness at the interface between the adhesive film 1, and the metal terminal 2 and the heat-sealable resin layer 35 by disposing a layer formed of an acid-modified polyolefin on the metal terminal 2 side. Further, the adhesive film 1 for metal terminals can exhibit further excellent adhesiveness at the interface between the adhesive film 1 and the heat-sealable resin layer 35 by disposing a layer formed of a polyolefin on the heat-sealable resin layer 35 side of the exterior material 10 for power storage devices.

The adhesive film 1 for metal terminals is preferably a laminate sequentially including the first polyolefin layer 12a, the base material 11, and the second polyolefin layer 12b. The adhesive film 1 for metal terminals has, for example, a laminated structure in which the first polyolefin layer 12a, the base material 11, and the second polyolefin layer 12b are sequentially laminated as illustrated in Figs. 6 and 7. As described above, the adhesive film 1 for metal terminals particularly preferably has a three-layer configuration in which an acid-modified polypropylene layer, a polypropylene layer, and an acid-modified polypropylene layer are laminated in this order, or a three-layer configuration in which a polypropylene layer, a polypropylene layer, and an acid-modified polypropylene layer are laminated in this order. When having a three-layer configuration in which a polypropylene layer, a polypropylene layer, and an acid-modified polypropylene layer are laminated in this order, the adhesive film 1 for metal terminals can particularly suitably achieve adhesion between the exterior material 10 for power storage device and the metal terminal 2 by disposing the acid-modified polypropylene layer forming one surface on the metal terminal 2 side and the polypropylene layer forming the other surface on the heat-sealable resin layer 35 side of the exterior material 10 for power storage devices.

In the first and second polyolefin layers 12a, 12b, the acid-modified polyolefin is not particularly limited as long as it is a polyolefin modified with an acid. However, preferable examples of the acid-modified polyolefin include a polyolefin graft-modified with an unsaturated carboxylic acid or an anhydride thereof.

Specific examples of the polyolefin to be modified with an acid include polyethylene such as low-density polyethylene, medium-density polyethylene, high-density polyethylene, and linear low-density polyethylene; crystalline or noncrystalline polypropylene such as homopolypropylene, polypropylene as a block copolymer (e.g., a block copolymer of propylene and ethylene), and polypropylene as a random copolymer (e.g., a random copolymer of propylene and ethylene); and a terpolymer of ethylene-butene-propylene. Among these polyolefins, preferred are, for example, polyethylene and polypropylene.

In addition, the polyolefin to be modified with an acid may be a cyclic polyolefin. For example, a carboxylic acid-modified cyclic polyolefin is a polymer obtained by copolymerizing a monomer constituting a cyclic polyolefin, with a part of the monomer replaced with an α,β-unsaturated carboxylic acid or an anhydride thereof, or by block-polymerizing or graft-polymerizing a cyclic polyolefin with an α,β-unsaturated carboxylic acid or an anhydride thereof.

A cyclic polyolefin to be modified with an acid is a copolymer of an olefin and a cyclic monomer, and examples of the olefin as a constituent monomer of the cyclic polyolefin include ethylene, propylene, 4-methyl-1-pentene, butadiene,

and isoprene. Examples of a cyclic monomer i.e., the constituent monomer of the cyclic polyolefin include cyclic alkenes such as norbornene; specific examples include cyclic dienes such as cyclopentadiene, dicyclopentadiene, cyclohexadiene, and norbornadiene. Among these polyolefins, preferred are, for example, cyclic alkenes, and further preferred is, for example, norbornene. Examples of the constituent monomer also include styrene.

Examples of the carboxylic acid or the anhydride thereof used for the acid modification include maleic acid, acrylic acid, itaconic acid, crotonic acid, maleic anhydride, and itaconic anhydride. The first and second polyolefin layers 12a, 12b each preferably have a peak derived from maleic anhydride that is detected in analysis by infrared spectroscopy. For example, measurement of a maleic anhydride-modified polyolefin by infrared spectroscopy detects peaks derived from maleic anhydride at wave numbers of around 1760 $cm^{-1}$ and around 1780 $cm^{-1}$. When the first and second polyolefin layers 12a, 12b are formed of a maleic anhydride-modified polyolefin, the peaks derived from maleic anhydride are detected in the measurement by infrared spectroscopy. When the degree of acid modification is low, however, the peaks sometimes become too small to be detected. In that case, the analysis can be performed by nuclear magnetic resonance spectroscopy.

When either one of the first and second polyolefin layers 12a, 12b is formed of a polyolefin, examples of the polyolefin include the same polyolefins as described above for the polyolefin to be modified with an acid or the cyclic polyolefin to be modified with an acid.

The first and second polyolefin layers 12a, 12b may each be formed of one resin component alone or a blend polymer obtained by combining two or more resin components. In addition, the first and second polyolefin layers 12a, 12b may each be formed of only one layer or two or more layers having the identical resin component or different resin components.

Further, the first and second polyolefin layers 12a, 12b may each contain a filler as necessary. The first and second polyolefin layers 12a, 12b containing a filler allow the filler to function as a spacer and can therefore effectively suppress a short circuit between the metal terminal 2 and a barrier layer 33 of the exterior material 3 for power storage devices. The filler has a particle size in the range of, for example, about 0.1 to 35 μm, preferably about 5.0 to 30 μm, further preferably 10 to 25 μm. The content of the filler is, for example, about 5 to 30 parts by mass, more preferably about 10 to 20 parts by mass, relative to 100 parts by mass of the resin component(s) forming the first and second polyolefin layers 12a, 12b.

As the filler, both an inorganic filler and an organic filler can be used. Examples of the inorganic filler include carbon (graphite), silica, aluminum oxide, barium titanate, iron oxide, silicon carbide, zirconium oxide, zirconium silicate, magnesium oxide, titanium oxide, calcium aluminate, calcium hydroxide, aluminum hydroxide, magnesium hydroxide, and calcium carbonate. Examples of the organic filler include a fluororesin, a phenolic resin, a urea resin, an epoxy resin, an acrylic resin, a benzoguanamine-formaldehyde condensate, a melamine-formaldehyde condensate, crosslinked polymethyl methacrylate, and crosslinked polyethylene. In terms of shape stability, rigidity, and resistance to contents, aluminum oxide, silica, a fluororesin, an acrylic resin, and a benzoguanamine-formaldehyde condensate are preferred, and among these preferable examples, particularly spherical aluminum oxide and silica are more preferred. As a method for mixing the filler in the resin component(s) for forming the first and second polyolefin layers 12a, 12b, there can be used a method in which both the component(s) and the filler are melt-blended in advance by a Banbury mixer or the like and formed into masterbatch having a prescribed mixture ratio therebetween, a method in which the filler is directly mixed in the resin component(s), or the like.

In addition, the first and second polyolefin layers 12a, 12b may each contain a pigment as necessary. As the pigment, various inorganic pigments can be used. Specific preferable examples of the pigment include carbon (graphite) described above for the filler. Carbon (graphite) is a material generally used in a power storage device, and there is no possibility of carbon eluting into an electrolytic solution. In addition, carbon has a large coloring effect, so that it gives a sufficient coloring effect with a small addition amount not to inhibit the bondability, and carbon is never melted by heat, so that it can increase the apparent melt viscosity of a resin to which carbon is added. Further, carbon prevents a pressurized part from being thin during thermal bonding (heat sealing), so that excellent hermetic seal can be imparted between the exterior material for power storage devices and the metal terminal.

When a pigment, for example, carbon black having a particle size of approximately 0.03 μm is added to the first and second polyolefin layers 12a, 12b, the addition amount thereof is, for example, about 0.05 to 0.3 parts by mass, preferably about 0.1 to 0.2 parts by mass, relative to 100 parts by mass of the resin component(s) forming the first and second polyolefin layers 12a, 12b. Adding a pigment to the first and second polyolefin layers 12a, 12b enables the presence or absence of the adhesive film 1 for metal terminals to be detected by a sensor or examined by visual inspection. When a filler and a pigment are added to the first and second polyolefin layers 12a, 12b, the filler and the pigment may be added to the identical first or second polyolefin layer 12a, 12b. However, from the viewpoint of not inhibiting the heat sealability of the adhesive film 1 for metal terminals, it is preferred that the filler and the pigment are added to different layers of the first and second polyolefin layers 12a, 12b.

The first and second polyolefin layers 12a, 12b can each be formed of a polyolefin film or an acid-modified polyolefin film. When the first and second polyolefin layers 12a, 12b are formed of a polyolefin film or an acid-modified

polyolefin film, the adhesive film for metal terminals can be suitably produced by laminating a resin film formed of a polyolefin or acid-modified polyolefin described above on the base material 11 by, for example, a dry lamination method. Alternatively, the adhesive film for metal terminals can be suitably produced by extruding resin(s) for forming the first and second polyolefin layers 12a, 12b onto the base material 11.

From the viewpoint of allowing the adhesive film 1 for metal terminals to satisfy the properties described above and increase the conformity to the shape of the metal terminal, the first and second polyolefin layers 12a, 12b have a melt mass-flow rate (MFR) at 230°C of preferably approximately 5 g/10 min or more, more preferably approximately 7 g/10 min or more, further preferably approximately 8 g/10 min or more, and preferably approximately 11 g/10 min or less, more preferably approximately 10 g/10 min or less. A preferable range is, for example, about 5 to 11 g/10 min, about 5 to 10 g/10 min, about 7 to 11 g/10 min, about 7 to 10 g/10 min, about 8 to 11 g/10 min, and about 8 to 10 g/10 min. The melt mass-flow rate (MFR) of each of the first and second polyolefin layers 12a, 12b is a value (g/10 min) measured at 230°C in accordance with the specification of JIS K7210-1: 2014 (ISO 1133-1: 2011). When at least one of the first or second polyolefin layer 12a, 12b is an acid-modified polyolefin layer, it is particularly suitable that the value of the MFR of the acid-modified polyolefin layer satisfies the above value.

From the viewpoint of allowing the adhesive film 1 for metal terminals to satisfy the properties described above and increase the conformity to the shape of the metal terminal, the first and second polyolefin layers 12a, 12b have a melting point of preferably approximately 120°C or more, more preferably approximately 130°C or more, and preferably approximately 160°C or less, more preferably approximately 150°C or less. A preferable range is about 120 to 160°C, about 120 to 150°C, about 130 to 160°C, and about 130 to 150°C. The melting point of the first and second polyolefin layers 12a, 12b is measured by a method described in Examples.

When the first and second polyolefin layers 12a, 12b formed of a resin film are laminated on a surface of the base material 11, the base-material-11 side surfaces of the first and second polyolefin layers 12a, 12b may be subjected to known bonding facilitating means as necessary, such as a corona discharge treatment, an ozone treatment, or a plasma treatment. Particularly, the surfaces of the first and second polyolefin layers 12a, 12b that have been subjected to a corona discharge treatment increase the adhesiveness between the base material 11 and the first and second polyolefin layers 12a, 12b, so that excellent hermetic seal can be imparted between the exterior material for power storage devices and the metal terminal.

From the viewpoint of allowing the adhesive film 1 for metal terminals to exhibit higher adhesion strength to the metal terminal when heated and pressurized a plurality of times until the adhesive film 1 is bonded to the metal terminal, the first and second polyolefin layers 12a, 12b have a thickness of preferably approximately 10 μm or more, more preferably approximately 15 μm or more, and preferably approximately 50 μm or less, more preferably approximately 45 μm or less, further preferably 30 μm or less. A preferable range of the thickness of each of the first and second polyolefin layers 12a, 12b is, for example, about 10 to 50 μm, about 10 to 45 μm, about 10 to 30 μm, about 15 to 50 μm, about 15 to 45 μm, and 10 to 30 μm. Among these examples, particularly the range of 10 to 30 μm is preferred.

From the viewpoint of allowing the adhesive film 1 for metal terminals to satisfy the properties described above and exhibit higher adhesion strength to the metal terminal when heated and pressurized a plurality of times until the adhesive film 1 is bonded to the metal terminal, the ratio of the thickness of the base material 11 to the total thickness of the first and second polyolefin layers 12a, 12b is preferably approximately 0.7 or more, more preferably approximately 1.0 or more, and preferably approximately 4.0 or less, more preferably approximately 2.0 or less. A preferable range is, for example, about 0.7 to 4.0, about 0.7 to 2.0, about 1.0 to 4.0, and about 1.0 to 2.0. Among these examples, particularly the range of about 1.0 to 4.0 is preferred. Particularly, when at least one of the first or second polyolefin layer 12a, 12b is an acid-modified polypropylene layer and the proportion in thickness of the acid-modified polypropylene layer to the adhesive film 1 for metal terminals satisfies these values, the adhesive film 1 suppresses a decrease of water-vapor barrier properties. When the decrease of water-vapor barrier properties is suppressed, the long life and the long-term stability of the power storage device can be expected. From such a viewpoint, the upper limit of the ratio is preferably described above.

In addition, with the total thickness of the adhesive film 1 for metal terminals defined as 100%, the proportion of the total thickness of the first and second polyolefin layers 12a, 12b is preferably about 15 to 60%, more preferably 20 to 40%.

[Adhesion-enhancing agent layer 13]

An adhesion-enhancing agent layer 13 (see Fig. 7) is a layer provided as necessary, in order to strongly bond the base material 11 to the first and second polyolefin layers 12a, 12b. The adhesion-enhancing agent layer 13 may be provided between the base material 11 and only one of or both the first and second polyolefin layers 12a, 12b.

The adhesion-enhancing agent layer 13 can be formed using a known adhesion-enhancing agent such as an isocyanate-based, polyethyleneimine-based, polyester-based, polyurethane-based, or polybutadiene-based adhesion-enhancing agent. From the viewpoint of further improving the electrolytic solution resistance, the adhesion-enhancing

agent layer 13 is preferably formed of an isocyanate-based adhesion-enhancing agent among these examples. An isocyanate-based adhesion-enhancing agent containing an isocyanate component selected from a triisocyanate monomer or polymeric MDI has excellent lamination strength, and exhibits less reduction in lamination strength after immersion in an electrolytic solution. The adhesion-enhancing agent layer 13 is particularly preferably formed of particularly an adhesion-enhancing agent containing triphenylmethane-4,4',4"-triisocyanate as the triisocyanate monomer, or polymethylene polyphenyl polyisocyanate (NCO content: approximately 30%, viscosity: 200 to 700 mPa•s) as the polymeric MDI. Alternatively, the adhesion-enhancing agent layer 13 is also preferably formed of a two-liquid curable adhesion-enhancing agent containing, as a base agent, tris(p-isocyanatophenyl)thiophosphate as the triisocyanate monomer, or a polyethyleneimine-based agent, and containing polycarbodiimide as a crosslinking agent.

The adhesion-enhancing agent layer 13 can be formed by applying an adhesion-enhancing agent according to a known coating method such as a bar coating method, a roll coating method, or a gravure coating method, and drying the adhesion-enhancing agent. When an adhesion-enhancing agent containing a triisocyanate is used, the amount of the adhesion-enhancing agent to be applied is about 20 to 100 mg/m$^2$, preferably about 40 to 60 mg/m$^2$. When an adhesion-enhancing agent containing polymeric MDI is used, the amount of the adhesion-enhancing agent to be applied is about 40 to 150 mg/m$^2$, preferably about 60 to 100 mg/m$^2$. When a two-liquid curable adhesion-enhancing agent containing a polyethyleneimine-based agent as a base agent and polycarbodiimide as a crosslinking agent, the amount of the adhesion-enhancing agent to be applied is about 5 to 50 mg/m$^2$, preferably about 10 to 30 mg/m$^2$. The triisocyanate monomer is a monomer having three isocyanate groups in one molecule. The polymeric MDI is a mixture of MDI and an MDI oligomer obtained by polymerizing MDI, and is represented by the following formula:

[Chemical Formula 1]

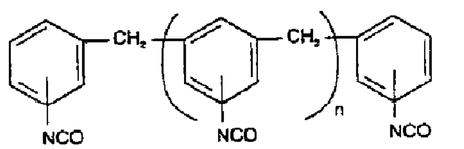

n = 0 – 4

The adhesive film 1, according to the present disclosure, for metal terminals can be produced, for example, by respectively laminating the first and second polyolefin layers 12a, 12b on both surfaces of the base material 11. Lamination between the base material 11 and the first and second polyolefin layers 12a, 12b may be achieved by a known method such as an extrusion lamination method or a thermal lamination method. When the base material 11 and the first and second polyolefin layers 12a, 12 are laminated, with the adhesion-enhancing agent layer 13 interposed therebetween, the lamination may be achieved for example, by applying an adhesion-enhancing agent for forming the adhesion-enhancing agent layer 13 onto the base material 11 according to a method described above and drying the adhesion-enhancing agent, and then laminating each of the first and second polyolefin layers 12a, 12b on the adhesion-enhancing agent layer 13.

The method for interposing the adhesive film 1 for metal terminals between the metal terminal 2 and the exterior material 3 for power storage devices is not particularly limited. For example, as illustrated in Figs. 1 to 3, the adhesive film 1 for metal terminals may be wound around a part of the metal terminal 2 where the metal terminal 2 is held between portions of the exterior material 3. Alternatively, although not illustrated, the adhesive film 1 for metal terminals may be disposed on both surface sides of two metal terminals 2 so as to cross the metal terminals 2, at a part of the metal terminal 2 where the metal terminals 2 is held between portions of the exterior material 3 for power storage devices.

[Metal terminal 2]

The adhesive film 1, according to the present disclosure, for metal terminals is used by interposing the adhesive film 1 between the metal terminal 2 and the exterior material 3 for power storage devices. The metal terminal 2 (tab) is a conductive member electrically connected to an electrode (a positive electrode or a negative electrode) of the power storage device element 4, and is formed of a metal material. The metal material for forming the metal terminal 2 is not particularly limited, and examples thereof include aluminum, nickel, and copper. For example, the metal terminal 2 connected to a positive electrode of a lithium-ion power storage device is typically formed of aluminum or the like. The metal terminal 2 connected to a negative electrode of a lithium-ion power storage device is typically formed of copper, nickel, or the like.

From the viewpoint of increasing the electrolytic solution resistance, a surface of the metal terminal 2 is preferably subjected to a chemical conversion treatment. For example, when the metal terminal 2 is formed of aluminum, specific examples of the chemical conversion treatment include known methods for forming a corrosion-resistant film of a phosphate, a chromate, a fluoride, a triazine-thiol compound, or the like. Among the methods for forming a corrosion-resistant film, suitable is a phosphoric acid chromate treatment that uses a material formed of three components, i.e., a phenolic resin, a chromium(III) fluoride compound, and phosphoric acid.

The size of the metal terminal 2 can be set, as appropriate, depending on the size of the power storage device used. The metal terminal 2 has a thickness of, for example, preferably about 50 to 1000 μm, more preferably about 70 to 800 μm. The metal terminal 2 has a length of, for example, preferably about 1 to 200 mm, more preferably 3 to 150 mm. The metal terminal 2 has a width of, for example, preferably about 1 to 200 mm, more preferably about 3 to 150 mm.

[Exterior material 3 for power storage devices]

The exterior material 3 for power storage devices includes, for example, a laminated structure having a laminate that includes at least a base material layer 31, the barrier layer 33, and the heat-sealable resin layer 35 in this order. Fig. 8 illustrates, as an example of a sectional structure of the exterior material 3 for power storage devices, an aspect of the exterior material 3 in which the base material layer 31, an adhesive agent layer 32 provided as necessary, the barrier layer 33, an adhesive layer 34 provided as necessary, and the heat-sealable resin layer 35 are laminated in this order. In the exterior material 3 for power storage devices, the base material layer 31 is positioned at an outer-layer side, and the heat-sealable resin layer 35 is an innermost layer. During assembly of a power storage device, portions of the heat-sealable resin layer 35 that are positioned around the power storage device element 4 are brought into contact and thermal fusion bonded to each other to hermetically seal the power storage device element 4 and thus seal the power storage device element 4. Figs. 1 to 3 illustrate the power storage device 10 obtained using the exterior material 3 for power storage devices that is an embossed type exterior material molded by embossing molding or the like. The exterior material 3 for power storage devices, however, may also be a pouched type exterior material that is formed without molding. Examples of the pouched type exterior material include a three-side sealed exterior material, a four-side sealed exterior material, and a pillow type exterior material, and any type of exterior material may be used.

The thickness of the laminate forming the exterior material 3 for power storage devices is not particularly limited, but the upper limit thereof is, for example, preferably approximately 180 μm or less, approximately 160 μm or less, approximately 155 μm or less, approximately 140 μm or less, approximately 130 μm or less, and approximately 120 μm or less, from the viewpoints of cost reduction, an improvement in energy density, and the like; and the lower limit thereof is, for example, preferably approximately 35 μm or more, approximately 45 μm or more, approximately 60 μm or more, and approximately 80 μm or more, from the viewpoint of maintaining a function of the exterior material 3, i.e., protection of the power storage device element 4. A preferable range is, for example, about 35 to 180 μm, about 35 to 160 μm, about 35 to 155 μm, about 35 to 140 μm, about 35 to 130 μm, about 35 to 120 μm, about 45 to 180 μm, about 45 to 160 μm, about 45 to 155 μm, about 45 to 140 μm, about 45 to 130 μm, about 45 to 120 μm, about 60 to 180 μm, about 60 to 160 μm, about 60 to 155 μm, about 60 to 140 μm, about 60 to 130 μm, about 60 to 120 μm, about 80 to 180 μm, about 80 to 160 μm, about 80 to 155 μm, about 80 to 140 μm, about 80 to 130 μm, and about 80 to 120 μm.

(Base material layer 31)

In the exterior material 3 for power storage devices, the base material layer 31 is a layer that functions as a base material of the exterior material for power storage devices and forms the outermost layer side.

A material for forming the base material layer 31 is not particularly limited as long as it has an insulation quality. Examples of the material for forming the base material layer 31 include a polyester, a polyamide, an epoxy, an acrylic, a fluororesin, polyurethane, a silicone resin, phenol, a polyether imide, a polyimide, and mixtures and copolymerized products thereof. Polyesters such as polyethylene terephthalate and polybutylene terephthalate have an advantage of being excellent in electrolytic solution resistance and less likely to generate, for example, whitening caused by deposition of an electrolytic solution and are thus suitably used as the material for forming the base material layer 31. A polyamide film is excellent in stretchability and capable of preventing generation of whitening caused by resin breakage in the base material layer 31 during molding and is thus suitably used as the material for forming the base material layer 31.

The base material layer 31 may be formed of a uniaxially or biaxially stretched resin film or may be formed of an unstretched resin film. Among these films, a uniaxially or biaxially stretched resin film, particularly a biaxially stretched resin film, which has improved heat resistance through oriented crystallization, is suitably used as the base material layer 31.

Among these materials, the resin film for forming the base material layer 31 is, for example, preferably nylon or a polyester, further preferably biaxially stretched nylon or a biaxially stretched polyester.

The base material layer 31 can be formed by laminating resin films formed of different materials to improve the pinhole resistance, and the insulation quality of packaging for power storage devices, in which the base material layer 31 is included. Specific examples of the lamination include a multilayer structure obtained by laminating a polyester film and a nylon film, and a multilayer structure obtained by laminating a biaxially stretched polyester and biaxially stretched

nylon. When the base material layer 31 is formed to have a multilayer structure, resin films may be bonded with an adhesive agent interposed therebetween or may be directly laminated without an adhesive agent interposed therebetween. Examples of a method for bonding films without an adhesive agent interposed therebetween include methods of bonding films in a heat-melted state, such as a coextrusion method, a sandwich lamination method, and a thermal lamination method.

The base material layer 31 may be subjected to a friction-reducing treatment in advance to improve the moldability. When the base material layer 31 is subjected to a friction-reducing treatment, the coefficient of friction of the surface of the base material layer 31 is not particularly limited, but is, for example, 1.0 or less. Examples of the friction-reducing treatment of the base material layer 31 include a matting treatment, formation of a thin film layer formed of a slipping agent, and a combination thereof.

The base material layer 31 has a thickness of, for example, about 10 to 50 μm, preferably about 15 to 30 μm.

(Adhesive agent layer 32)

In the exterior material 3 for power storage devices, the adhesive agent layer 32 is a layer that is disposed on the base material layer 31 as necessary, to impart the adhesiveness to the base material layer 31. That is, the adhesive agent layer 32 is provided between the base material layer 31 and the barrier layer 33.

The adhesive agent layer 32 is formed of an adhesive agent capable of bonding the base material layer 31 to the barrier layer 33. The adhesive agent used to form the adhesive agent layer 32 may be a two-liquid curable adhesive agent or a one-liquid curable adhesive agent. The bonding mechanism of the adhesive agent used to form the adhesive agent layer 32 is not particularly limited, and may be any of a chemical reaction type, a solvent volatilization type, a heat melting type, a heat pressing type, and the like.

From the viewpoint of allowing the adhesive agent layer 32 to be excellent in, for example, extensibility, durability and yellowing-inhibiting action under high-humidity conditions, and thermal degradation-inhibiting action during heat sealing, and to prevent a decrease in lamination strength between the base material layer 31 and the barrier layer 33 and thus effectively suppress generation of delamination, a resin component of the adhesive agent that can be used to form the adhesive agent layer 32 is, for example, preferably a polyurethane-based two-liquid curable adhesive agent; a polyamide, a polyester, or a blend resin of any of these resins and a modified polyolefin.

The adhesive agent layer 32 may be multilayered with different adhesive agent components. When the adhesive agent layer 32 is multilayered with different adhesive agent components, from the viewpoint of improving the lamination strength between the base material layer 31 and the barrier layer 33, it is preferred to select, as an adhesive agent component to be disposed on the base material layer 31 side, a resin having excellent bondability to the base material layer 31, and select, as an adhesive agent component to be disposed on the barrier layer 33 side, an adhesive agent component having excellent bondability to the barrier layer 33. When the adhesive agent layer 32 is multilayered with different adhesive agent components, specific preferable examples of the adhesive agent component to be disposed on the barrier layer 33 side include an acid-modified polyolefin, a metal-modified polyolefin, a mixed resin of a polyester and an acid-modified polyolefin, and a resin containing a copolymerized polyester.

The adhesive agent layer 32 has a thickness of, for example, about 2 to 50 μm, preferably about 3 to 25 μm.

(Barrier layer 33)

In the exterior material for power storage devices, the barrier layer 33 is a layer that has a function of preventing ingress of, for example, water vapor, oxygen, and light into a power storage device, in addition to improving the strength of the exterior material. The barrier layer 33 is preferably a metal layer, that is, a layer formed of a metal. Specific examples of the metal for forming the barrier layer 33 include aluminum, stainless steel, and titanium. Preferred is, for example, aluminum. The barrier layer 33 can be formed of, for example, a metal foil, a metal deposition film, an inorganic oxide deposition film, a carbon-containing inorganic oxide deposition film, or a film provided with any of these deposition films. The barrier layer 33 is preferably formed of a metal foil, further preferably formed of an aluminum foil. From the viewpoint of preventing generation of wrinkles and pinholes on the barrier layer 33 during production of the exterior material for power storage devices, the barrier layer 33 is more preferably formed of a soft aluminum foil such as annealed aluminum (JIS H4160: 1994 A8021H-O, JIS H4160: 1994 A8079H-O, JIS H4000: 2014 A8021P-O, JIS H4000: 2014 A8079P-O).

From the viewpoint of reducing the thickness of the exterior material for power storage devices and making pinholes less likely to be generated by molding, the barrier layer 33 has a thickness of, for example, preferably about 10 to 200 μm, more preferably about 20 to 100 μm

For bond stability, prevention of dissolution and corrosion, and the like, at least one surface, preferably both surfaces of the barrier layer 33 are preferably subjected to a chemical conversion treatment. Here, the chemical conversion treatment is a treatment for forming a corrosion resistance film on a surface of the barrier layer.

(Adhesive layer 34)

In the exterior material 3 for power storage devices, the adhesive layer 34 is a layer provided between the barrier layer 33 and the heat-sealable resin layer 35 as necessary, to strongly bond the heat-sealable resin layer 35.
The adhesive layer 34 is formed of an adhesive agent capable of bonding the barrier layer 33 to the heat-sealable resin layer 35. The composition of the adhesive agent used to form the adhesive layer is not particularly limited, and examples thereof include a resin composition containing an acid-modified polyolefin. Examples of the acid-modified polyolefin include the same polyolefins as described for the first and second polyolefin layers 12a, 12b.
The adhesive layer 34 has a thickness of, for example, about 1 to 40 μm, preferably about 2 to 30 μm.

(Heat-sealable resin layer 35)

In the exterior material 3 for power storage devices, the heat-sealable resin layer 35 corresponds to the innermost layer and is a layer whose portions are thermal fusion bonded to each other during assembly of a power storage device to hermetically seal a power storage device element.
A resin component used for the heat-sealable resin layer 35 is not particularly limited as long as it is heat-sealable, and examples thereof include a polyolefin and a cyclic polyolefin.
Specific examples of the polyolefin include polyethylene such as low-density polyethylene, medium-density polyethylene, high-density polyethylene, and linear low-density polyethylene; crystalline or noncrystalline polypropylene such as homopolypropylene, polypropylene as a block copolymer (e.g., a block copolymer of propylene and ethylene), and polypropylene as a random copolymer (e.g., a random copolymer of propylene and ethylene); and a terpolymer of ethylene-butene-propylene. Among these polyolefins, preferred are, for example, polyethylene and polypropylene.
The cyclic polyolefin is a copolymer of an olefin and a cyclic monomer, and examples of the olefin as a constituent monomer of the cyclic polyolefin include ethylene, propylene, 4-methyl-1-pentene, butadiene, and isoprene. Examples of a cyclic monomer i.e., the constituent monomer of the cyclic polyolefin include cyclic alkenes such as norbornene; specific examples include cyclic dienes such as cyclopentadiene, dicyclopentadiene, cyclohexadiene, and norbornadiene. Among these polyolefins, preferred are, for example, cyclic alkenes, and further preferred is, for example, norbornene. Examples of the constituent monomer also include styrene.
Among these resin components, preferred are a crystalline or noncrystalline polyolefin, a cyclic polyolefin, and a blend polymer thereof; and more preferred are polyethylene, polypropylene, a copolymer of ethylene and norbornene, and a blend polymer of two or more thereof.
The heat-sealable resin layer 35 may be formed of one resin component alone or a blend polymer obtained by combining two or more resin components. Further, the heat-sealable resin layer 35 may be formed of only one layer or two or more layers having the identical resin component or different resin components.
The thickness of the heat-sealable resin layer 35 is not particularly limited, but is, for example, about 2 to 2000 μm, preferably about 5 to 1000 μm, further preferably about 10 to 500 μm.

## 2. Power storage device 10

A power storage device 10 according to the present disclosure includes: a power storage device element 4 including at least a positive electrode, a negative electrode, and an electrolyte; an exterior material 3 for power storage devices that seals the power storage device element 4; and metal terminals 2 respectively electrically connected to the positive electrode and the negative electrode and protruding outward from the exterior material 3. The power storage device 10 according to the present disclosure is characterized in that the adhesive film 1, according to the present disclosure, for metal terminals is interposed between the metal terminals 2 and the exterior material 3 for power storage devices. That is, the power storage device 10 according to the present disclosure can be produced by a method including a step of interposing the adhesive film 1, according to the present disclosure, for metal terminals between the metal terminals 2 and the exterior material 3 for power storage devices.
Specifically, a power storage device 10 obtained using an exterior material 3 for power storage devices is provided by covering, with an exterior material 3 for power storage devices, a power storage device element 4 including at least a positive electrode, a negative electrode, and an electrolyte, so as to form, around the power storage device element 4, a flange of the exterior material (a region where portions of a heat-sealable resin layer 35 are in contact with each other, i.e., a peripheral edge 3a of the exterior material), while allowing metal terminals 2 respectively connected to the positive electrode and the negative electrode to protrude outward and interposing the adhesive film 1, according to the present disclosure, for metal terminals between the metal terminals 2 and the heat-sealable resin layer 35; and then heat-sealing the portions at the flange of the heat-sealable resin layer 35 to hermetically seal the power storage device element 4. When the exterior material 3 for power storage devices is used to house the power storage device element 4, it is used such that the heat-sealable resin layer 35 of the exterior material 3 is directed inside (the surface

in contact with the power storage device element 4).

The exterior material, of the present disclosure, for power storage devices can be suitably used for power storage devices such as batteries (including a condenser, a capacitor, and the like). The exterior material, of the present disclosure, for power storage devices may be used for both a primary battery and a secondary battery, but is preferably used for a secondary battery. The type of the secondary battery to which the exterior material, of the present disclosure, for power storage devices is applied is not particularly limited, and examples thereof include a lithium-ion battery, a lithium-ion polymer battery, an all-solid-state battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, a condenser, and a capacitor. Among these secondary batteries, for example, a lithium-ion battery and a lithium-ion polymer battery are suitable subjects for application of the exterior material, of the present disclosure, for power storage devices.

EXAMPLES

The present disclosure is described in detail below by way of examples and comparative examples. It is to be noted that the present disclosure is not limited to the examples.

Examples 1 to 16 and Comparative Examples 1 to 6

<Production of adhesive film for metal terminals>

In each of the examples and the comparative examples, a polypropylene layer having a melting point and an MFR indicated in Table 1 and a thickness indicated in Table 2 was used as a base material (hereinafter, sometimes referred to as a "PP layer"). In addition, a maleic anhydride-modified polypropylene (hereinafter, sometimes referred to as "PPa") having a melting point and a melt mass-flow rate (MFR) indicated in Table 1 was used as a first polyolefin layer (PPa layer) and a second polyolefin layer (PPa layer). In Examples 1 to 12 and Comparative Example 3, an adhesive film for metal terminals in which the PPa layer, the PP layer, and the PPa layer were sequentially laminated was obtained by extruding the polypropylene and the maleic anhydride-modified polypropylene in the form of 2-type 3 layers, using a T-die extruder. In Examples 13 to 16 and Comparative Examples 4 to 6, an adhesive film for metal terminals in which the PPa layer, the PP layer, and the PPa layer were sequentially laminated was obtained by an inflation method. In Comparative Examples 1 and 2, an adhesive film for metal terminals in which the PPa layer, the PP layer, and the PPa layer were sequentially laminated was obtained by extruding, with a T-die extruder, the maleic anhydride-modified polypropylene (PPa) onto each of both surfaces of the base material (PP layer) formed of a polypropylene film (PP). Table 2 shows the thickness of each of the PPa layer, the PP layer, and the PPa layer.

The physical properties indicated in Table 2, such as a tensile elastic modulus, a lower yield point stress, water-vapor barrier properties, and a rate of change in thickness, of the adhesive films for metal terminals were adjusted by, for example, the melting point, the MFR, and the thickness of the PPa layer and the PP layer, the thickness ratio between the layers, and further the conditions (such as extrusion width from a T-die, a stretch ratio, a stretch rate, and heat-treatment temperature) of a T-die, inflation, or the like in the production of the adhesive film 1 for metal terminals.

<Measurement of melting point>

The melting point, indicated in Table 1, of each of the PP layer and the PPa layer is a value measured by the following method. The melt peak temperature of the layer was measured twice by a differential scanning calorimeter (DSC, differential scanning calorimeter Q200 manufactured by TA Instruments, Inc.) Specifically, in the differential scanning calorimeter measurement (DSC) performed according to the procedure in JIS K7121: 2012 (Testing Methods for Transition Temperatures of Plastics (Amendment 1 of JIS K7121: 1987)), the PP layer or the PPa layer was retained at - 20°C for 10 minutes, then heated from -20°C to 250°C at a temperature increase rate of 10°C/min, subjected to first measurement of a melt peak temperature P (°C), and then retained at 250°C for 10 minutes. Next, the layer was cooled from 250°C to -20°C at a temperature decrease rate of 10°C/min and retained for 10 minutes. Further, the layer was heated from -20°C to 250°C at a temperature increase rate of 10°C/min and subjected to second measurement of a melt peak temperature Q (°C). The flow rate of nitrogen gas was 50 ml/min. According to the procedure described above, the melt peak temperature P (°C) in the first measurement and the melt peak temperature Q (°C) in the second measurement were obtained, and the maximum peak was defined as the melting point.

<Melt mass-flow rate (MFR)>

The melt mass-flow rate (MFR), indicated in Table 1, of each of the PP layer and the PPa layer is a value (g/10

min) measured at 230°C in accordance with the specification of JIS K7210-1: 2014 (ISO 1133-1: 2011).

[Table 1]

| | PPa layer | | | PP layer | |
|---|---|---|---|---|---|
| | Melting point (°C) | MFR (g/10 min) | Forming method | Melting point (°C) | MFR (g/10 min) |
| Example 1 | 140 | 9.2 | T-die (2-type 3-layer extrusion of PP layer and PPa layer) | 142 | 2.3 |
| Example 2 | 140 | 9.2 | | 142 | 2.3 |
| Example 3 | 140 | 9.2 | | 166 | 1.6 |
| Example 4 | 140 | 9.2 | | 166 | 1.6 |
| Example 5 | 140 | 9.2 | | 145 | 7.0 |
| Example 6 | 135 | 5.7 | | 145 | 7.0 |
| Example 7 | 135 | 5.7 | | 165 | 7.0 |
| Example 8 | 140 | 9.2 | | 165 | 7.0 |
| Example 9 | 140 | 9.2 | | 142 | 2.3 |
| Example 10 | 135 | 5.7 | | 142 | 2.3 |
| Example 11 | 135 | 5.7 | | 160 | 3.0 |
| Example 12 | 140 | 9.2 | | 160 | 3.0 |
| Example 13 | 149 | 8.0 | Inflation method | 167 | 2.0 |
| Example 14 | 149 | 8.0 | | 167 | 2.0 |
| Example 15 | 149 | 8.0 | | 167 | 2.0 |
| Example 16 | 140 | 7.0 | | 164 | 3.0 |
| Comparative Example 1 | 140 | 9.2 | T-die (Extrusion of PPa layer onto PP layer) | 160 | 3.9 |
| Comparative Example 2 | 140 | 9.2 | | 160 | 3.9 |
| Comparative Example 3 | 140 | 9.2 | T-die (2-type 3-layer extrusion of PP layer and PPa layer) | 142 | 2.3 |
| Comparative Example 4 | 143 | 7.2 | Inflation method | 163 | 5.0 |
| Comparative Example 5 | 141 | 7.4 | | 162 | 5.0 |
| Comparative Example 6 | 140 | 9.2 | | 142 | 2.3 |

<Tensile elastic modulus B before heating and pressurizing>

The tensile elastic modulus B of the adhesive film for metal terminals (an adhesive film for metal terminals before the heating and pressurizing in the <Tensile elastic modulus A after heating and pressurizing> described later) in an environment at 25°C was measured in accordance with the specification of JIS K7161-1 (ISO527-1). Specifically, each of the adhesive films for metal terminals, which were obtained in the examples and the comparative examples, was cut into a strip having a width (TD) of 15 mm and a length (MD) of 50 mm. Next, a stress-strain curve of the test piece of the adhesive film for metal terminals was obtained in an environment at 25°C, using a TENSILON universal material testing instrument (RTG-1210 manufactured by A & D Company, Limited), under the conditions of a tensile speed of 300 mm/min and a chuck distance of 30 mm, and the tensile elastic modulus B of the adhesive film before heating and pressurizing was derived from the inclination of a line connecting two points representing strains of 0.05% and 0.25%. Table 2 shows the results.

<Tensile elastic modulus A after heating and pressurizing>

The tensile elastic modulus of the adhesive film for metal terminals after heating and pressurizing for 12 seconds under the conditions of a temperature of 180°C and a surface pressure of 0.0067 MPa was measured by the following procedure. First, each of the adhesive films for metal terminals, which were obtained in the examples and the comparative examples, was cut into a strip having a width (TD) of 15 mm and a length (MD) of 50 mm. Next, the adhesive film for metal terminals held between two tetrafluoroethylene-ethylene copolymer films (ETFE films, thickness: 100 μm) was placed on a hot plate heated to 180°C, a sponge-attached 500-g weight was put thereon, the adhesive film was left standing for 12 seconds and was immediately thereafter left standing for 1 hour in an environment at atmospheric pressure and 25°C, and thus a test pieces was obtained. Next, a stress-strain curve of the test piece was obtained in an environment at atmospheric pressure and 25°C, using a TENSILON universal material testing instrument (RTG-1210 manufactured by A & D Company, Limited), under the conditions of a tensile speed of 300 mm/min and a chuck distance of 30 mm, and the tensile elastic modulus A of the adhesive film for metal terminals after heating and pressurizing was derived from the inclination of a line connecting two points representing strains of 0.05% and 0.25%. Table 2 shows the results.

<Lower yield point stress after heating and pressurizing>

The stress (lower yield point stress) at a lower yield point L (see the schematic diagram in Fig. 9) was derived from a stress-strain curve obtained by performing a tensile test in accordance with a method specified in JIS K7127, under the conditions of a temperature of 25°C, a tensile speed of 175 mm/min, and a chuck distance of 30 mm. Table 2 shows the results.

<Water-vapor barrier properties (moisture content)>

First, an exterior material for power storage devices (hereinafter, sometimes simply referred to as an "exterior material") was produced by the following procedure. An aluminum alloy foil (thickness: 35 μm) was laminated on a base material layer (thickness: 25 μm) formed of a nylon film by a dry lamination method. Specifically, a two-liquid urethane adhesive agent (a polyol compound and an aromatic isocyanate-based compound) was applied to one surface of a barrier layer formed of an aluminum alloy foil to form an adhesive agent layer (thickness: 3 μm) on the aluminum alloy foil. Next, the adhesive agent layer provided on the aluminum alloy foil and a base material layer were laminated and then subjected to an aging treatment to produce a laminate including the base material layer, the adhesive agent layer, and the barrier layer. Next, an adhesive layer (thickness: 20 μm, disposed on the metal layer side) formed of a maleic anhydride-modified polypropylene resin and a heat-sealable resin layer (thickness: 15 μm, innermost layer) formed of a random polypropylene resin were coextruded onto the barrier layer of the laminate to laminate the adhesive layer and the heat-sealable resin layer on the barrier layer. Next, the laminate obtained was heated at 190°C for 2 minutes to give an exterior material for power storage devices in which the base material layer, the adhesive agent layer, the barrier layer, the adhesive layer, and the heat-sealable resin layer were laminated in this order.

Next, as illustrated in the schematic diagrams of Fig. 11, the exterior material 3 obtained was cut into a square (Fig. 11a) with a length (MD) of 120 mm and a breadth (TD) of 120 mm. In addition each of the adhesive films 1 for metal terminals (hereinafter, sometimes simply referred to as an "adhesive film") obtained in the examples and the comparative examples was cut into a rectangle with a length (MD) of 120 mm and a breadth (TD) of 10 mm. The exterior material 10 was longitudinally folded in half, with the heat-sealable resin layer directed inside, two adhesive films for metal terminals were disposed therein such that the longitudinal direction and the transverse direction of the adhesive films matched with those of the exterior material, and thus a laminate (Fig. 11b) was obtained in which the exterior material, the adhesive film, the adhesive film, and the exterior material were sequentially laminated. The adhesive films were disposed along the long side to be heat-sealed as described later, in the exterior material 10. Next, the layers of the laminate were thermal fusion bonded, using heat seal bars (stainless-steel plates), at the positions of the long side and a short side of the laminate, and the laminate was thus formed into a bag one short side of which was not thermal fusion bonded. The thermal fusion bonding of the long side (s1 in Fig. 11c) was performed under the conditions of use of a heat seal bar having a width of 10 mm, a temperature of 190°C, a surface pressure of 1.0 MPa, a period of 3 seconds, and one-time operation. The thermal fusion bonding of the short side included first heat sealing performed under the conditions of use of a heat seal bar having a width of 7 m, a temperature of 190°C, a surface pressure of 2.0 MPa, a period of 3 seconds, and one-time operation, and second heat sealing performed after the first sealing, under the conditions of a heat-sealing position at 3 mm inner from the short side, use of a heat seal bar having a width of 7 m, a temperature of 190°C, a surface pressure of 2.0 MPa, a period of 3 seconds, and one-time operation. That is, a short side 2 (s2 in Fig. 11c) was heat-sealed twice, with the heat sealed position shifted by 3 mm, and was thus heat-sealed at a width of 10 mm. Next, a thermal fusion bonded portion of the long side was cut off along the long-side direction so

as to give a long-side heat-sealed portion having a width of 3mm, and the laminate was dried at a dry room for 1 day (Fig. 11d). Next, approximately 3.0 g of a liquid (moisture content: 0%) containing ethylene carbonate, diethyl carbonate, and dimethyl carbonate at 1 : 1 : 1 (volume ratio) were injected (Fig. 11e) from the position of the short side not thermal fusion bonded, and the short side having not been thermal fusion bonded was also heat-sealed similarly to the above-described short side to form a hermetically sealed bag (Fig. 11f). This hermetically sealed bag was left standing for 30 days in an environment at a temperature of 60°C and a relative humidity of 90%, and the moisture content of a liquid taken from the hermetically sealed bag was measured at a dry room by the Karl Fischer method.

Table 2 shows the results.

<Rate of change in thickness>

The rate of change in thickness of each of the adhesive films for metal terminals between before and after the heating and pressurizing for 12 seconds under the conditions of a temperature of 180°C, a surface pressure of 0.0067 MPa in the <Tensile elastic modulus A after heating and pressurizing> described above was calculated from the calculation formula (thickness of adhesive film after heating and pressuring)/(thickness of adhesive film before heating and pressuring) $\times$ 100. The rate of change in thickness is the average of values measured at 3 points in the MD of the adhesive film for metal terminals. Table 2 shows the results.

<Measurement of adhesion strength between adhesive film for metal terminals and metal terminal>

As a metal terminal, aluminum (JIS H4160: 1994 A8079H-O) having a length of 50 mm, a breadth of 22.5 mm, and a thickness of 0.2 mm was prepared. Each of the adhesive films for metal terminals, which were obtained in the examples and the comparative examples, was cut into a shape with a length of 45 mm and a width of 15 mm. Next, the adhesive film for metal terminals was put on the metal terminal to give a laminate including the metal terminal and the adhesive film. In the lamination, the metal terminal and the adhesive film for metal terminals were laminated such that the longitudinal direction and the transverse direction of the metal terminal are respectively matched with the length direction and the width direction of the adhesive film and the centers of the metal terminal and the adhesive film are matched with each other. Next, the laminate on whose adhesive film for metal terminals a tetrafluoroethylene-ethylene copolymer film (ETFE film, thickness: 100 μm) was put (whose adhesive film for metal terminals had a surface thereof covered with an ETFE film) was placed on a hot plate heated to 180°C (the metal terminal being directed to the hot plate side), a sponge-attached 500-g weight was put thereon, the laminate was left standing for 12 seconds, and thus the adhesive film was thermal fusion bonded (surface pressure: 0.0067 MPa, contact area: 300 $mm^2$) to the metal terminal. The laminate thermal fusion bonded was naturally cooled to 25°C. Next, the metal terminal was peeled from the adhesive film for metal terminals in an environment at 25°C, with a TENSILON universal material testing instrument (RTG-1210 manufactured by A & D Company, Limited). The maximum strength in the peeling was defined as the adhesion strength (N/15 mm) with respect to the metal terminal. The peel rate was set to 175 mm/min, the peel angle was set to 180°, and the chuck distance was set to 30 mm, and the average of values measured three times was adopted. The process of leaving the laminate standing for 12 seconds in a heating and pressurizing environment at a temperature of 180°C and a surface pressure of 0.016 MPa is a process set assuming the heat and the pressure applied in the tentative bonding step and the actual bonding step described above. Table 2 shows the results.

<Bend test>

Each of the adhesive films for metal terminals, which were obtained in the examples and the comparative examples, was cut into a size with a length (MD) of 100 mm and a breadth (TD) of 15 mm. The adhesive film was wound around a mandrel tester (a metal bar with φ2 mm). In the winding, the adhesive film for metal terminals was wound such that the MD of the adhesive film was vertical to the metal bar of the mandrel tester. The bend test was performed in this state, and the adhesive film for metal terminals was observed by visual inspection and evaluated by the following criteria. Table 2 shows the results.

A: There is no whitening at a winding part of the adhesive film for metal terminals, and the adhesive film returns to its original shape after the winding.
B: There is no whitening at a winding part of the adhesive film for metal terminals, but the adhesive film does not return to its original shape and is curled after the winding.
C: There is whitening at a winding part of the adhesive film for metal terminals.

<Conformity evaluation 1 (adhesive film/metal terminal)>

As a metal terminal, an aluminum foil (JIS H4160: 1994 A8079H-O) having a thickness of 200 μm was prepared. Each of the adhesive films for metal terminals, which were obtained in the examples and the comparative examples, were prepared. Next, the metal terminal was held between two adhesive films to give a laminate including the adhesive film, the metal terminal, and the adhesive film. Next, the laminate held between two tetrafluoroethylene-ethylene copolymer films (ETFE films, thickness: 100 μm) was placed on a hot plate heated to 180°C, a sponge-attached 500-g weight was put thereon, the laminate was left standing for 12 seconds, and thus the adhesive films were thermal fusion bonded (surface pressure: 0.0067 MPa, contact area: 300 $mm^2$) to the metal terminal. As illustrated in the schematic diagram of Fig. 10, this process formed a part in which the metal terminal held between the adhesive films had the surround thereof covered with the adhesive films and the two adhesive films were thermal fusion bonded to each other. The laminate thermal fusion bonded was naturally cooled to 25°C, the section in the thickness direction of the laminate was observed by a laser microscope, and the conformity of the adhesive films for metal terminals to the shape of the metal terminal was evaluated by the following criteria. Table 2 shows the results.

A: There is no air bubble between the adhesive films for metal terminals and the metal terminal.
B: There is no air bubble at the interface between the adhesive films for metal terminals and the metal terminal, but there are air bubbles in the adhesive film at around the interface.
C: There are air bubbles at the interface between the adhesive films for metal terminals and the metal terminal, and there are also air bubbles in the adhesive films at around the interface.

<Conformity evaluation 2 (adhesive film/exterior terminal)>

Similarly to the procedure described in the Conformity evaluation 1 described above, a laminate including an adhesive film, a metal terminal, and an adhesive film was produced. Next, the laminate obtained was held between two exterior materials and sealed in this state, using a heat seal tester, under the conditions of a temperature of 180°C, a surface pressure of 1.0 MPa, and a period of 3 seconds, to give a laminate in which the exterior materials were thermal fusion bonded to the adhesive films. The laminate obtained was naturally cooled to 25°C, the section in the thickness direction of the laminate was observed by a laser microscope, and the conformity of the adhesive films for metal terminals to the shape of the exterior materials for power storage devices was evaluated by the following criteria. Table 2 shows the results.

A: There is no void between the adhesive films for metal terminals and the exterior materials for power storage devices.
B: There are fine voids (diameter of 10 μm or less) between the adhesive films for metal terminals and the exterior materials for power storage devices.
C: There are voids (diameter of more than 10 μm) between the adhesive films for metal terminals and the exterior materials for power storage devices.

<Impact absorption energy>

The impact absorption energy was calculated from the area of a part surrounded by the stress-strain curve obtained in the <Tensile elastic modulus A after heating and pressurizing> described above. Table 2 shows the results.

[Table 2]

| | Configuration of adhesive film for metal terminals | | | | | | Tensile elastic modulus | | | Lower yield point stress after heating and pressurizing (MPa) | Impact absorption energy (MPa) | Water-vapor barrier properties (Moisture content%) | Rate of change in thickness (%) | Adhesion strength to metal terminal (N/15 mm) | Bend test | Conformity evaluation 1 | Conformity evaluation 2 |
|---|---|---|---|---|---|---|---|---|---|---|---|---|---|---|---|---|---|
| | PPa layer (μm) | PP layer (μm) | PPa layer (μm) | Total thickness (μm) | Thickness proportion (PPa layers/ film) | Thickness ratio (PP layer/ PPa layers) | Tensile elastic modulus B (Before heating and pressurizing) (MPa) | Tensile elastic modulus A (After heating and pressurizing) (MPa) | Difference (Tensile elastic modulus A - tensile elastic modulus B) (MPa) | | | | | | | Adhesive film/metal terminal | Adhesive film/ exterior material |
| Example 1 | 25 | 100 | 25 | 150 | 33.3 | 2.0 | 444 | 510 | 66 | 17.2 | 163.0 | 20.1 | 96.5 | 45.6 | A | A | A |
| Example 2 | 15 | 120 | 15 | 150 | 20.0 | 4.0 | 458 | 500 | 42 | 17.9 | 176.0 | 18.0 | 96.6 | 47.7 | A | - | - |
| Example 3 | 25 | 100 | 25 | 150 | 33.3 | 2.0 | 559 | 607 | 48 | 20.7 | 165.0 | 15.6 | 97.7 | 57.8 | B | - | - |
| Example 4 | 15 | 120 | 15 | 150 | 20.0 | 4.0 | 600 | 680 | 80 | 25.6 | 176.0 | - | 96.7 | 54.8 | B | - | - |
| Example 5 | 25 | 100 | 25 | 150 | 33.3 | 2.0 | 458 | 573 | 115 | 17.5 | 142.0 | - | 92.6 | 50.1 | A | - | - |
| Example 6 | 25 | 100 | 25 | 150 | 33.3 | 2.0 | 444 | 535 | 91 | 16.8 | 257.0 | - | 95.3 | 46.8 | A | - | - |
| Example 7 | 25 | 90 | 25 | 140 | 35.7 | 1.8 | 466 | 569 | 103 | - | 121.0 | - | 98.6 | 48.6 | A | - | - |
| Example 8 | 25 | 100 | 25 | 150 | 33.3 | 2.0 | 485 | 577 | 92 | 18.8 | 123.0 | - | 97.7 | 51.8 | A | - | - |
| Example 9 | 30 | 100 | 30 | 160 | 37.5 | 1.7 | 442 | 502 | 60 | 17.3 | 176.0 | - | 91.6 | 47.1 | A | - | - |
| Example 10 | 25 | 100 | 25 | 150 | 33.3 | 2.0 | 414 | 499 | 85 | 17.0 | 220.0 | - | 92.3 | 45.2 | A | - | - |
| Example 11 | 25 | 100 | 25 | 150 | 33.3 | 2.0 | 514 | 643 | 129 | 20.0 | 118.0 | - | 94.8 | 52.2 | A | - | - |
| Example 12 | 30 | 110 | 30 | 170 | 35.3 | 1.8 | 461 | 620 | 159 | 20.0 | 161.0 | - | 92.0 | 54.2 | B | - | - |
| Example 13 | 35 | 80 | 35 | 150 | 46.7 | 1.1 | 867 | 825 | -42 | - | 3.0 | - | 103.9 | 61.3 | C | A | B |
| Example 14 | 45 | 60 | 45 | 150 | 60.0 | 0.7 | 780 | 707 | -73 | 19.1 | 92.0 | 25.1 | 104.8 | 56.3 | C | A | B |

(continued)

| | Configuration of adhesive film for metal terminals | | | | | | Tensile elastic modulus | | | Lower yield point stress after heating and pressurizing (MPa) | Impact absorption energy (MPa) | Water-vapor barrier properties (Moisture content%) | Rate of change in thickness (%) | Adhesion strength to metal terminal (N/15 mm) | Bend test | Conformity evaluation 1 | Conformity evaluation 2 |
|---|---|---|---|---|---|---|---|---|---|---|---|---|---|---|---|---|---|
| | PPa layer (μm) | PP layer (μm) | PPa layer (μm) | Total thickness (μm) | Thickness proportion (PPa layers/ film) | Thickness ratio (PP layer/ PPa layers) | Tensile elastic modulus B (Before heating and pressurizing) (MPa) | Tensile elastic modulus A (After heating and pressurizing) (MPa) | Difference (Tensile elastic modulus A - tensile elastic modulus B) (MPa) | | | | | | | Adhesive film/metal terminal | Adhesive film/ exterior material |
| Example 15 | 45 | 60 | 45 | 150 | 60.0 | 0.7 | 720 | 711 | -9 | 19.8 | 99.0 | - | 105.2 | 50.2 | C | - | - |
| Example 16 | 35 | 80 | 35 | 150 | 45.7 | 1.1 | 786 | 570 | -216 | 18.8 | 215.0 | 21.4 | 104.3 | 48.6 | C | A | B |
| Comparative Example 1 | 30 | 80 | 30 | 140 | 42.9 | 1.3 | 417 | 460 | 43 | 15.7 | 146.0 | - | 104.2 | 37.4 | B | - | - |
| Comparative Example 2 | 35 | 80 | 35 | 150 | 46.7 | 1.1 | 421 | 465 | 44 | 15.9 | 155.0 | - | 104.4 | 38.2 | B | - | - |
| Comparative Example 3 | 37.5 | 75 | 37.5 | 150 | 50.0 | 1.0 | 445 | 468 | 23 | 16.6 | 234.0 | 25.3 | 98.7 | 42.0 | A | - | - |
| Comparative Example 4 | 35 | 80 | 35 | 150 | 46.7 | 1.1 | 563 | 477 | -86 | 16.3 | 206.0 | - | 102.4 | 40.8 | - | - | - |
| Comparative Example 5 | 30 | 50 | 75 | 155 | 67.7 | 0.5 | 460 | 424 | -36 | 15.4 | 181.0 | - | 105.4 | 40.2 | - | - | - |

(continued)

| | Configuration of adhesive film for metal terminals | | | | | | Tensile elastic modulus | | | Lower yield point stressafter heating and pressurizing (MPa) | Impact absorption energy (MPa) | Water-vapor barrier properties (Moisture content%) | Rate of change in thickness (%) | Adhesion strength to metal terminal (N/15 mm) | Bend test | Conformity evaluation 1 | Conformity evaluation 2 |
|---|---|---|---|---|---|---|---|---|---|---|---|---|---|---|---|---|---|
| | PPa layer (μm) | PP layer (μm) | PPa layer (μm) | Total thickness (μm) | Thickness proportion (PPa layers/ film) | Thickness ratio (PP layer/ PPa layers) | Tensile elastic modulus B (Before heating and pressurizing) (MPa) | Tensile elastic modulus A (After heating and pressurizing) (MPa) | Difference (Tensile elastic modulus A-tensile elastic modulus B) (MPa) | | | | | | | Adhesive film/metal terminal | Adhesive film/ exterior material |
| Comparative Example 6 | 16.7 | 66.6 | 16.7 | 100 | 33.4 | 2.0 | 437 | 333 | -104 | 15.6 | 156.0 | - | 96.1 | 35.7 | A | B | A |

In Table 2, the symbol "_" means that the measurement was not performed.

The adhesive films, according to Examples 1 to 16, for metal terminals are configured to be interposed between a metal terminal electrically connected to an electrode of a power storage device element and an exterior material for power storage devices that seals the power storage device element, the adhesive film having a tensile elastic modulus A of 490 MPa or more. As is clear from the results shown in Table 2, the adhesive films, according to Examples 1 to 16, for metal terminals that have this configuration exhibit high adhesion strength to a metal terminal when heated and pressurized a plurality of times until the adhesive film is bonded to the metal terminal.

Particularly, the adhesive films, according to Examples 1 and 2, for metal terminals had adhesion strength as sufficient as an adhesion strength of 45 N/15 mm or more, were excellent in the bendability (bend test), the rate of change in thickness, and the impact absorption energy, had good adhesiveness, bendability, rate of change in thickness, and impact absorption energy, and were thus adhesive films for metal terminals excellent in balance of comprehensive properties. That is, in the features of the adhesive film, according to the present disclosure, for metal terminals, the adhesive films according to Examples 1 and 2 have a tensile elastic modulus A of about 500 to 550 MPa, a tensile elastic modulus B of 420 to 480 MPa, a difference between the tensile elastic moduli A and B of 40 to 75 MPa, a total thickness of 145 to 155 μm, a thickness of the base material of 90 to 120 μm, a thickness of each of the first and second polyolefin layers of 10 to 30 μm, and a ratio of the thickness of the base material to the total thickness of the first and second polyolefin layers of 1.0 to 4.0. The adhesive films, according to Examples 1 and 2, for metal terminals thereby have good adhesiveness, bendability, rate of change in thickness, and impact absorption energy, and are thus adhesive films for metal terminals excellent in balance of comprehensive properties.

Examples 17

<Production of adhesive film for metal terminals>

An unstretched polypropylene layer (hereinafter, sometimes referred to as a "CPP layer") having a melting point and an MFR indicated in Table 3 and a thickness indicated in Table 4 was used as a base material. In addition, polypropylene (PP) and a maleic anhydride-modified polypropylene (PPa) that had a melting point and a melt mass-flow rate (MFR) indicated in Table 3 were respectively used as a first polyolefin layer (PP layer) and a second polyolefin layer (PPa layer). An adhesive film for metal terminals in which the PP layer, the CPP layer, and the PPa layer were sequentially laminated was obtained by respectively extruding, with a T-die extruder, the polypropylene (PP) and the maleic anhydride-modified polypropylene (PPa) onto surfaces of the base material formed of the unstretched polypropylene film (CPP layer). Table 4 shows the thickness of each of the PP layer, the CPP layer, and the PPa layer.

Similarly to Examples 1 to 16, the physical properties indicated in Table 4, such as a tensile elastic modulus, a lower yield point stress, water-vapor barrier properties, and a rate of change in thickness, of the adhesive film for metal terminals were adjusted by, for example, the melting point, the MFR, and the thickness of the PP layer, the PPa layer, and the CPP layer, the thickness ratio between the layers, and further the conditions (such as extrusion width from a T-die, a stretch ratio, a stretch rate, and heat-treatment temperature) of a T-die in the production of the adhesive film 1 for metal terminals.

Similarly to Examples 1 to 16, the adhesive film, according to Example 17, for terminals was subjected to the measurement of the tensile elastic moduli, the yield point stress after heating and pressurizing, the impact absorption energy, the water-vapor barrier properties, and the rate of change in thickness, the bend test, and the conformity evaluations 1 and 2. Table 4 shows the results.

[Table 3]

| | PP layer | | | PPa layer | | | CPP layer | |
|---|---|---|---|---|---|---|---|---|
| | Melting point (°C) | MFR (g/10 min) | Forming method | Melting point (°C) | MFR (g/10 min) | Forming method | Melting point (°C) | MFR (g/10 min) |
| Example 17 | 140 | 11.0 | T-die (Extrusion of PP layer onto CPP layer) | 143 | 7.0 | T-die (Extrusion of PPa layer onto CPP layer) | 163 | 3.0 |

[Table 4]

| | Configuration of adhesive film for metal terminals | | | | | | Tensile elastic modulus | | | | | | | | | Conformity evaluation 1 | Conformity evaluation 2 |
|---|---|---|---|---|---|---|---|---|---|---|---|---|---|---|---|---|---|
| | PP layer (μm) | CPP layer (μm) | PP layer (μm) | Total thickness (μm) | Thickness proportion (PP layers/ film) | Thickness ratio (CPP layer/ PP layers) | Tensile elastic modulus B (Before heating and pressurizing) (MPa) | Tensile elastic modulus A (After heating and pressurizing) (MPa) | Difference (Tensile elastic modulus A - tensile elastic modulus B) (MPa) | Lower yield point stress after heating and pressurizing (MPa) | Impact absorption energy (MPa) | Water-vapor barrier properties (Moisture content%) | Rate of change in thickness (%) | Adhesion strength to metal terminal (N/15 mm) | Bend test | Adhesive film/metal terminal | Adhesive film/ exterior material |
| Example 17 | 35 | 80 | 35 | 150 | 46.7 | 1.1 | 526 | 535 | 9 | 17.7 | 189 | 17.1 | 98.6 | 44.5 | A | A | A |

Similarly to Examples 1 to 16, the adhesive film, according to Example 17, for metal terminals is configured to be interposed between a metal terminal electrically connected to an electrode of a power storage device element and an exterior material for power storage devices that seals the power storage device element, the adhesive film having a tensile elastic modulus A of 490 MPa or more. As is clear from the results shown in Table 4, the adhesive film, according to Example 17, for metal terminals that has this configuration exhibits high adhesion strength to a metal terminal when heated and pressurized a plurality of times until the adhesive film is bonded to the metal terminal.

As described above, the present disclosure provides an invention with the aspects described below.

Item 1. An adhesive film for metal terminals that is configured to be interposed between a metal terminal electrically connected to an electrode of a power storage device element and an exterior material for power storage devices that seals the power storage device element,
the adhesive film having a tensile elastic modulus A of 490 MPa or more when measured in an environment at a temperature of 25°C, after the adhesive film is left standing for 12 seconds in a heating and pressurizing environment at a temperature of 180°C and a surface pressure of 0.0067 MPa and further left standing for 1 hour in an environment at a temperature of 25°C.

Item 2. The adhesive film according to item 1, having a tensile elastic modulus B of 700 MPa or less when measured in an environment at a temperature of 25°C, before the adhesive film is exposed to the heating and pressurizing environment.

Item 3. The adhesive film according to item 2, having a difference in tensile elastic modulus of 5 MPa or more, the difference being calculated by deducting a value of the tensile elastic modulus B from a value of the tensile elastic modulus A.

Item 4. The adhesive film according to any one of items 1 to 3, having a tensile elastic modulus A of 680 MPa or less.

Item 5. The adhesive film according to any one of items 1 to 4, having a lower yield point stress of 17.0 MPa or more, the lower yield point stress being derived from a graph that is obtained by performing a tensile test in accordance with a method specified in JIS K7127, under conditions of a temperature of 25°C, a tensile speed of 175 mm/min, and a chuck distance of 30 mm, and represents a relationship between stress (MPa) and strain (mm).

Item 6. The adhesive film according to any one of items 1 to 5, having a rate of change in thickness of 90% or more and 100% or less between before and after heating and pressurizing for 12 seconds under conditions of a temperature of 180°C and a surface pressure of 0.0067 MPa, the rate of change being calculated by a following equation.

$$\text{Rate of change in thickness} = (\text{thickness of adhesive film after heating and pressurizing}/\text{thickness of adhesive film before heating and pressurizing}) \times 100$$

Item 7. The adhesive film according to any one of items 1 to 6, having a thickness of 140 μm or more.

Item 8. The adhesive film according to any one of items 1 to 7, being formed of a laminate including a first polyolefin layer, a base material, and a second polyolefin layer in this order.

Item 9. The adhesive film according to item 8, having a ratio of a thickness of the base material to a total thickness of the first polyolefin layer and the second polyolefin layer of 0.7 or more and 4.0 or less.

Item 10. The adhesive film according to item 8 or 9, in which
the base material has a thickness of 50 μm or more and 150 μm or less.

Item 11. The adhesive film according to any one of items 8 to 10, in which
the first polyolefin layer and the second polyolefin layer each have a thickness of 10 μm or more and 50 μm or less.

Item 12. The adhesive film according to any one of items 8 to 11, in which
at least one of the first polyolefin layer or the second polyolefin layer has a melt mass-flow rate at 230°C of 7.2 g/10 min or more and 9.8 g/10 min or less.

Item 13. The adhesive film according to any one of items 8 to 12, in which
the base material has a melt mass-flow rate at 230°C of 1.8 g/10 min or more and 5.0 g/10 min or less.

Item 14. The adhesive film according to any one of items 8 to 13, in which
the base material contains a resin having a polyolefin backbone.

Item 15. The adhesive film according to any one of items 8 to 14, in which
the first polyolefin layer and the second polyolefin layer contain an acid-modified polyolefin.

Item 16. The adhesive film according to any one of items 1 to 15, in which

the exterior material is formed of a laminate including at least a base material layer, a barrier layer, and a heat-sealable resin layer in this order, and
the adhesive film is interposed between the heat-sealable resin layer and the metal terminal.

Item 17. A metal terminal having an adhesive film for metal terminals attached thereto, the metal terminal being formed by attaching the adhesive film according to any one of items 1 to 16 to a metal terminal.

Item 18. A power storage device including: a power storage device element including at least a positive electrode, a negative electrode, and an electrolyte; an exterior material for power storage devices that seals the power storage device element; and metal terminals respectively electrically connected to the positive electrode and the negative electrode and protruding outward from the exterior material,
the adhesive film according to any one of items 1 to 16 being interposed between the metal terminals and the exterior material.

Item 19. A method for producing a power storage device, the method being configured to produce a battery including: a power storage device element including at least a positive electrode, a negative electrode, and an electrolyte; an exterior material for power storage devices that seals the power storage device element; and metal terminals respectively electrically connected to the positive electrode and the negative electrode and protruding outward from the exterior material,
the method including a step of interposing the adhesive film according to any one of items 1 to 16 between the metal terminals and the exterior material, and sealing the power storage device element with the exterior material.

DESCRIPTION OF REFERENCE SIGNS

1: Adhesive film for metal terminals
2: Metal terminal
3: Exterior material for power storage devices
3a: Peripheral edge of exterior material for power storage devices
4: Power storage device element
10: Power storage device
11: Base material
12a: First polyolefin layer
12b: Second polyolefin layer
13: Adhesion-enhancing agent layer
31: Base material layer
32: Adhesive agent layer
33: Barrier layer
34: Adhesive layer
35: Heat-sealable resin layer

## Claims

1. An adhesive film for metal terminals that is configured to be interposed between a metal terminal electrically connected to an electrode of a power storage device element and an exterior material for power storage devices that seals the power storage device element,
the adhesive film having a tensile elastic modulus A of 490 MPa or more when measured in an environment at a temperature of 25°C, after the adhesive film is left standing for 12 seconds in a heating and pressurizing environment at a temperature of 180°C and a surface pressure of 0.0067 MPa and further left standing for 1 hour in an environment at a temperature of 25°C.

2. The adhesive film according to claim 1, having a tensile elastic modulus B of 700 MPa or less when measured in an environment at a temperature of 25°C, before the adhesive film is exposed to the heating and pressurizing environment.

3. The adhesive film according to claim 2, having a difference in tensile elastic modulus of 5 MPa or more, the difference being calculated by deducting a value of the tensile elastic modulus B from a value of the tensile elastic modulus A.

4. The adhesive film according to any one of claims 1 to 3, having a tensile elastic modulus A of 680 MPa or less.

5. The adhesive film according to any one of claims 1 to 4, having a lower yield point stress of 17.0 MPa or more, the lower yield point stress being derived from a graph that is obtained by performing a tensile test in accordance with

a method specified in JIS K7127, under conditions of a temperature of 25°C, a tensile speed of 175 mm/min, and a chuck distance of 30 mm, and represents a relationship between stress (MPa) and strain (mm).

6. The adhesive film according to any one of claims 1 to 5, having a rate of change in thickness of 90% or more and 100% or less between before and after heating and pressurizing for 12 seconds under conditions of a temperature of 180°C and a surface pressure of 0.0067 MPa, the rate of change being calculated by a following equation,
rate of change in thickness = (thickness of adhesive film after heating and pressurizing/thickness of adhesive film before heating and pressurizing) $\times$ 100.

7. The adhesive film according to any one of claims 1 to 6, having a thickness of 140 $\mu$m or more.

8. The adhesive film according to any one of claims 1 to 7, being formed of a laminate including a first polyolefin layer, a base material, and a second polyolefin layer in this order.

9. The adhesive film according to claim 8, having a ratio of a thickness of the base material to a total thickness of the first polyolefin layer and the second polyolefin layer of 0.7 or more and 4.0 or less.

10. The adhesive film according to claim 8 or 9, wherein the base material has a thickness of 50 $\mu$m or more and 150 $\mu$m or less.

11. The adhesive film according to any one of claims 8 to 10, wherein the first polyolefin layer and the second polyolefin layer each have a thickness of 10 $\mu$m or more and 50 $\mu$m or less.

12. The adhesive film according to any one of claims 8 to 11, wherein at least one of the first polyolefin layer or the second polyolefin layer has a melt mass-flow rate at 230°C of 7.2 g/10 min or more and 9.8 g/10 min or less.

13. The adhesive film according to any one of claims 8 to 12, wherein the base material has a melt mass-flow rate at 230°C of 1.8 g/10 min or more and 5.0 g/10 min or less.

14. The adhesive film according to any one of claims 8 to 13, wherein the base material contains a resin having a polyolefin backbone.

15. The adhesive film according to any one of claims 8 to 14, wherein the first polyolefin layer and the second polyolefin layer contain an acid-modified polyolefin.

16. The adhesive film according to any one of claims 1 to 15, wherein

    the exterior material is formed of a laminate including at least a base material layer, a barrier layer, and a heat-sealable resin layer in this order, and
    the adhesive film is interposed between the heat-sealable resin layer and the metal terminal.

17. A metal terminal having an adhesive film for metal terminals attached thereto, the metal terminal being formed by attaching the adhesive film according to any one of claims 1 to 16 to a metal terminal.

18. A power storage device comprising: a power storage device element including at least a positive electrode, a negative electrode, and an electrolyte; an exterior material for power storage devices that seals the power storage device element; and metal terminals respectively electrically connected to the positive electrode and the negative electrode and protruding outward from the exterior material,
the adhesive film according to any one of claims 1 to 16 being interposed between the metal terminals and the exterior material.

19. A method for producing a power storage device, the method being configured to produce a battery including: a power storage device element including at least a positive electrode, a negative electrode, and an electrolyte; an exterior material for power storage devices that seals the power storage device element; and metal terminals respectively electrically connected to the positive electrode and the negative electrode and protruding outward from the exterior material,
the method comprising a step of interposing the adhesive film according to any one of claims 1 to 16 between the metal terminals and the exterior material, and sealing the power storage device element with the exterior material.

FIG. 1

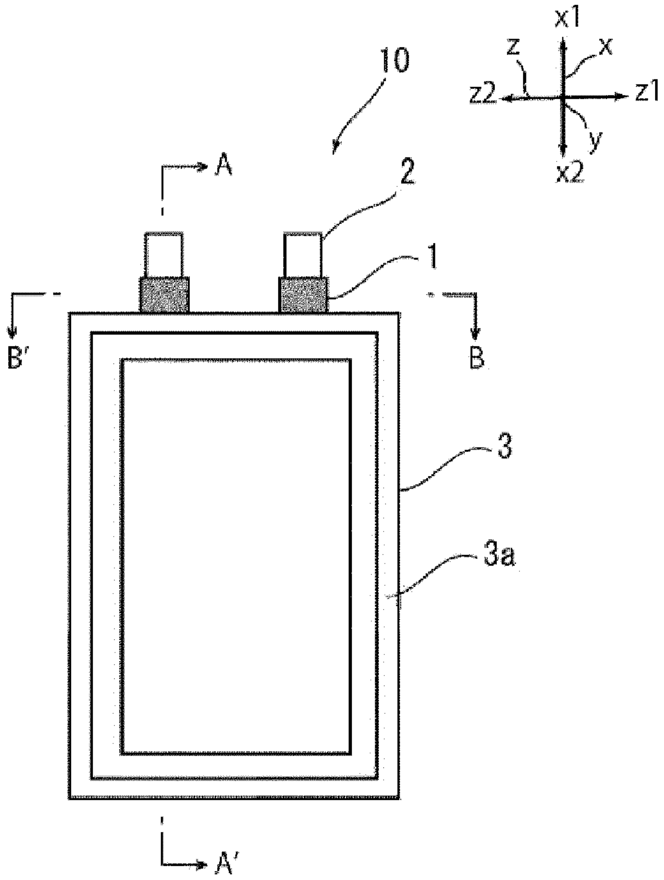


FIG. 2

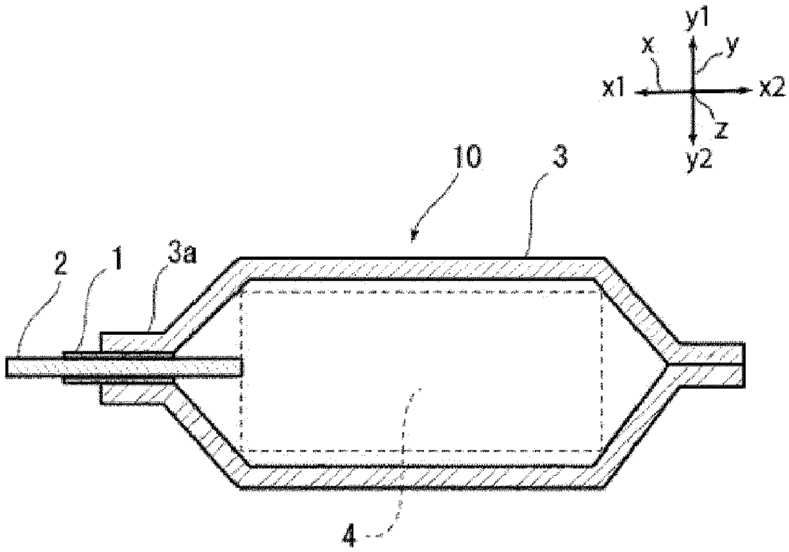

FIG. 3

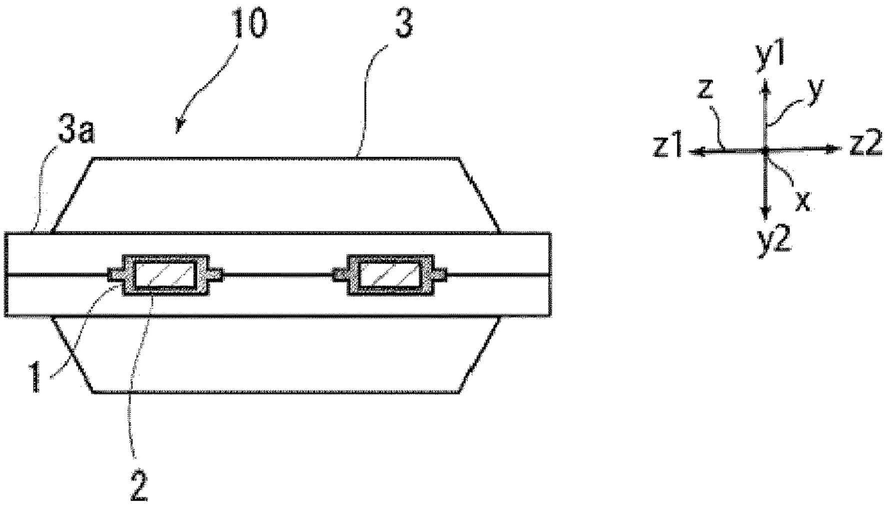


FIG. 4

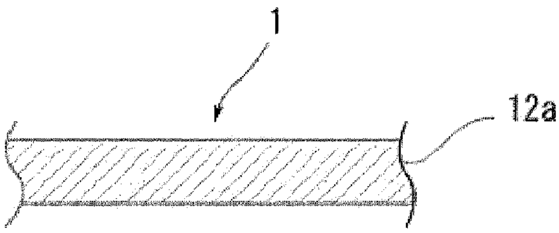


FIG. 5

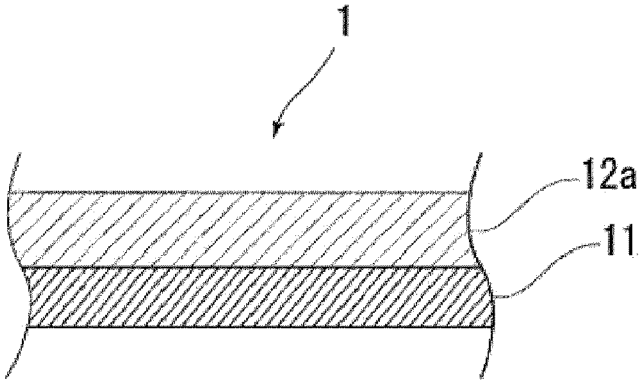

FIG. 6

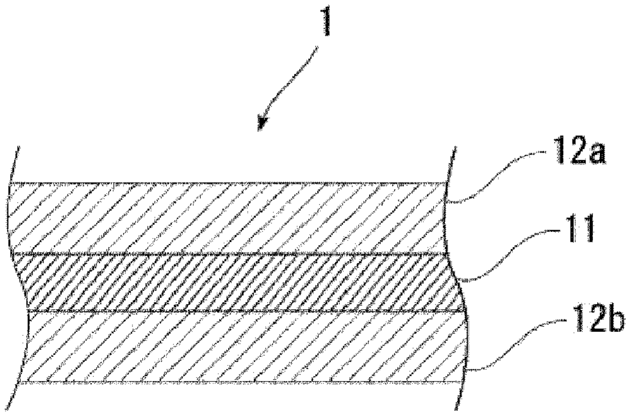


FIG. 7

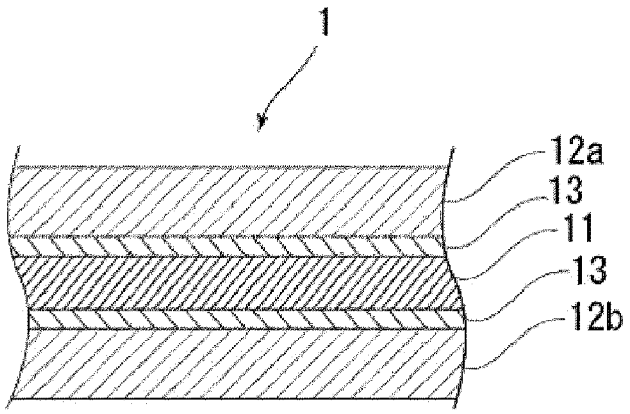


FIG. 8

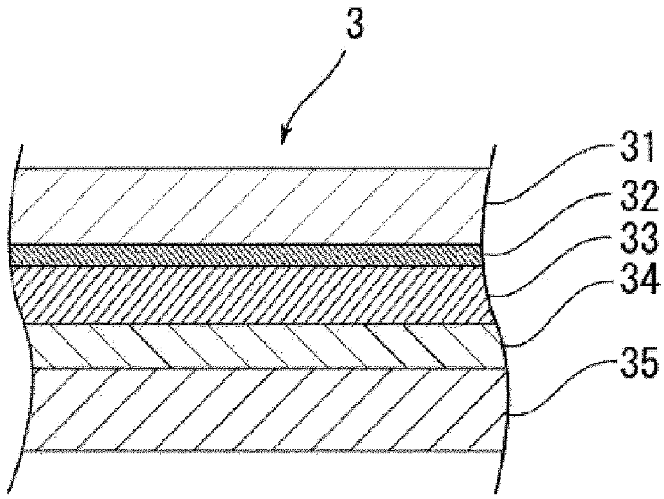

FIG. 9

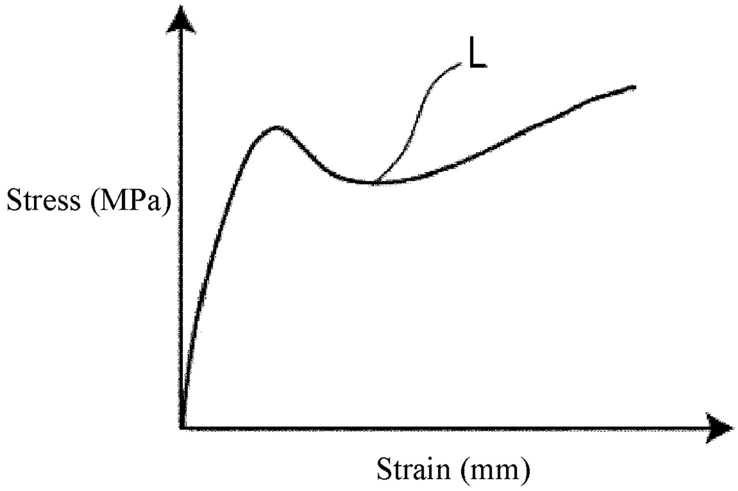


FIG. 10

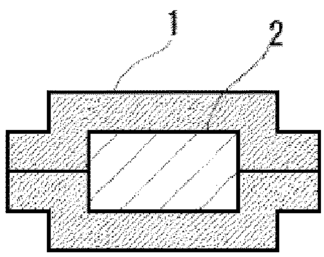


FIG. 11

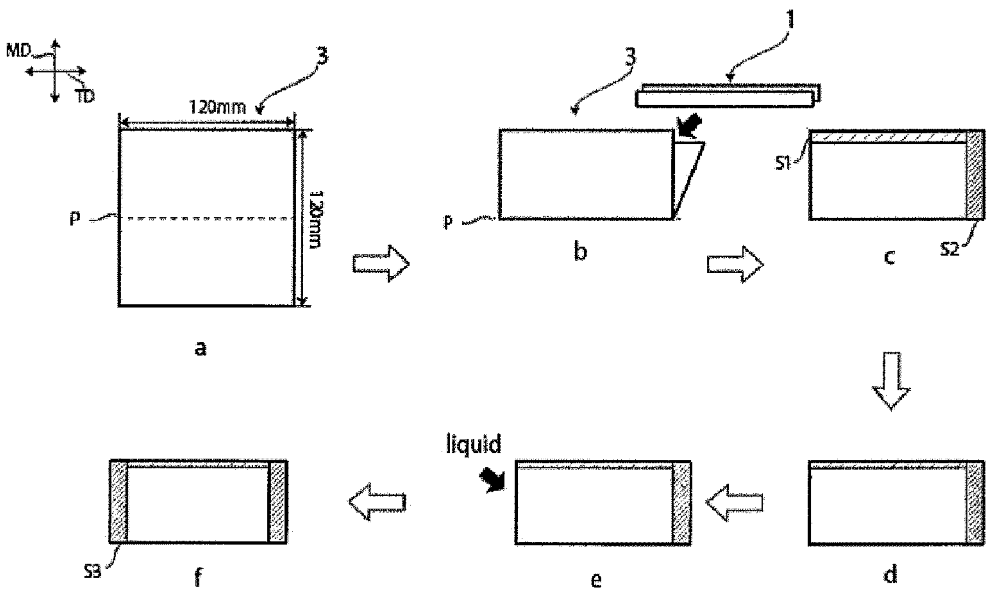

FIG. 12

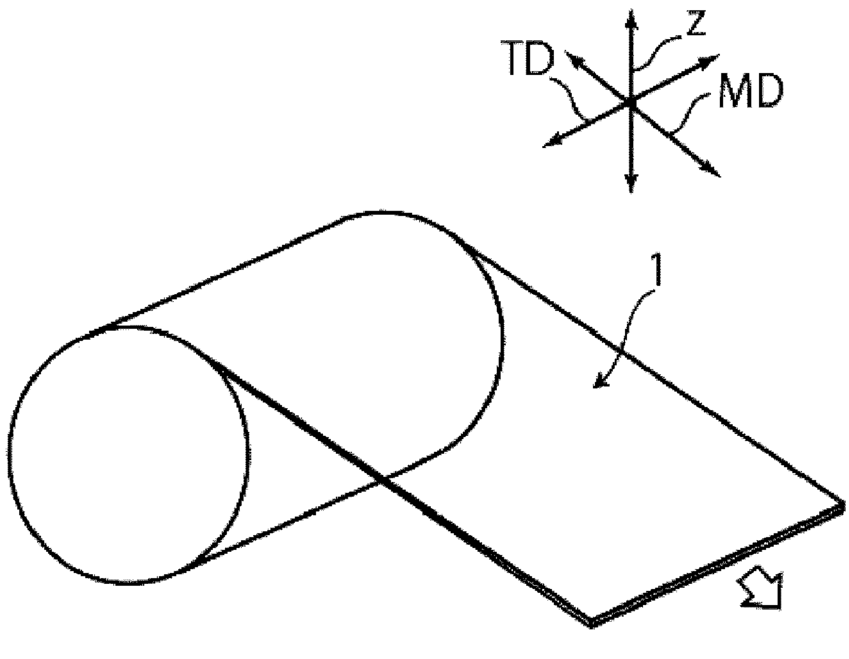

## INTERNATIONAL SEARCH REPORT

International application No. PCT/JP2020/027120

A. CLASSIFICATION OF SUBJECT MATTER

B32B 27/32(2006.01)i; H01G 11/74(2013.01)i; H01G 11/78(2013.01)i; H01G 11/80(2013.01)i; B32B 15/085(2006.01)i; H01M 2/02(2006.01)i; H01M 2/06(2006.01)i; H01M 2/08(2006.01)i; H01M 2/30(2006.01)i; H01M 2/34(2006.01)i

FI: H01M2/08 K; H01M2/06 K; B32B27/32 E; B32B15/085 Z; H01M2/30 D; H01G11/80; H01M2/30 B; H01M2/34 B; H01G11/74; H01M2/02 K; H01G11/78

According to International Patent Classification (IPC) or to both national classification and IPC

B. FIELDS SEARCHED

Minimum documentation searched (classification system followed by classification symbols)

H01M2/02; H01M2/06; H01M2/08; H01M2/30; H01M2/34; H01G11/74; H01G11/78; H01G11/80; B32B15/085; B32B27/32

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-132538 A (TOPPAN PRINTING CO., LTD.) 17.07.2014 (2014-07-17) paragraphs [0001], [0021], [0023]-[0040], table 1, fig. 1-3(b) | 1-8,10-19<br>9,12-14 |
| X<br>Y | JP 2017-069151 A (DAINIPPON PRINTING CO., LTD.) 06.04.2017 (2017-04-06) paragraphs [0001], [0011], [0016]-[0041], [0046]-[0070], [0081]-[0095], [0099], table 1, fig. 1-5 | 1-12,15-19<br>9,12-14 |
| X<br>Y | WO 2018/110702 A1 (DAINIPPON PRINTING CO., LTD.) 21.06.2018 (2018-06-21) paragraphs [0011], [0015]-[0023], [0029], [0033]-[0054], [0066]-[0091], fig. 1-6 | 1-11,14-19<br>9,12-14 |

☐ Further documents are listed in the continuation of Box C.  ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>17 September 2020 (17.09.2020) | Date of mailing of the international search report<br>29 September 2020 (29.09.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2020/027120

| Patent Documents referred in the Report | Publication Date | Patent Family | Publication Date |
|---|---|---|---|
| JP 2014-132538 A | 17 Jul. 2014 | US 2015/0311483 A1 paragraphs [0002], [0032], [0037]-[0061], table 1, fig. 1-3B<br>WO 2014/106887 A1<br>TW 201444149 A<br>CN 104885256 A<br>KR 10-2015-0104097 A | |
| JP 2017-069151 A | 06 Apr. 2017 | (Family: none) | |
| WO 2018/110702 A1 | 21 Jun. 2018 | CN 108886117 A<br>KR 10-2019-0089930 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015079638 A